Europäisches Patentamt

European Patent Office

Office européen des brevets

(19)

(11) **EP 1 302 688 A2**

(12) **EUROPÄISCHE PATENTANMELDUNG**

(43) Veröffentlichungstag:
**16.04.2003 Patentblatt 2003/16**

(51) Int Cl.⁷: **F16D 23/14**

(21) Anmeldenummer: **02019062.5**

(22) Anmeldetag: **28.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **09.10.2001 DE 10149703**
**21.08.2002 DE 10238118**

(71) Anmelder: **ZF Sachs AG**
**97424 Schweinfurt (DE)**

(72) Erfinder:
- **Heiartz, Markus, Dipl.-Ing.**
  **97084 Würzburg (DE)**
- **Orlamünder, Andreas, Dipl.-Ing.**
  **97422 Schweinfurt (DE)**
- **Vogt, Sebastian, Dipl.-Ing.**
  **97616 Bad Neustadt (DE)**
- **Pagels, Olaf**
  **97493 Bergrheinfeld (DE)**
- **Zink, Georg, Dipl.-Ing. (FH)**
  **97447 Gerolzhofen (DE)**
- **Kleuker, Christoph, Dipl.-Ing. (FH)**
  **97469 Gochsheim (DE)**

(54) **Betätigungseinrichtung für eine Reibungskupplungseinrichtung, gegebenenfalls Doppel- oder Mehrfach- Reibungskupplungseinrichtung**

(57) Die Erfindung betrifft nach einem Aspekt eine Betätigungseinrichtung (200) für eine im Antriebsstrang eines Kraftfahrzeugzeugs angeordnete Reibungskupplungseinrichtung (10) zum Einleiten von Betätigungskräften, insbesondere Einrück- oder Ausrückkräften, in die Reibungskupplungseinrichtung, um wenigstens eine Reibungskupplungsanordnung (12, 32, 34; 12, 32, 36) der Reibungskupplungseinrichtung im Einrück- oder Ausrücksinne zu betätigen, umfassend wenigstens ein der oder einer Reibungskupplungsanordnung zugeordnetes Betätigungsglied (222; 224), das relativ zu wenigstens einem axial im Wesentlichen feststehenden Stützglied (220) zum Ausüben der Betätigungskräfte axial verstellbar ist und zu einem der Kupplungsanordnung zugeordneten Aktuator gehört oder unter Vermittlung eines der Kupplungsanordnung zugeordneten Aktuators axial relativ zum Stützglied (220) verstellbar ist. Es wird vorgeschlagen, dass ein derartiger Eingriff zwischen dem Betätigungsglied (222; 224) und dem Stützglied (220), dass eine unter Vermittlung des Aktuators dem Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird.

Fig.1

EP 1 302 688 A2

Printed by Jouve, 75001 PARIS (FR)

**Beschreibung**

Die Erfindung bezieht sich insbesondere (aber nicht ausschließlich) auf so genannte Doppel- oder Mehrfach-Reibungskupplungseinrichtungen zur Anordnung in einem Kraftfahrzeug-Antriebsstrang zur Momentenübertragung zwischen einer Antriebseinheit und einem Getriebe, wobei die Kupplungseinrichtung eine einer ersten Getriebeeingangswelle zugeordnete erste Reibungskupplungsanordnung und eine einer zweiten Getriebeeingangswelle zugeordnete zweite Kupplungsanordnung aufweist, sowie auf einen eine derartige Kupplungseinrichtung aufweisenden Kraftfahrzeug-Antriebsstrang. Betreffend die Kupplungseinrichtung wird in erster Linie (aber nicht ausschließlich) an so genannte Doppelkupplungen der Reibscheibenbauart gedacht, für die es bekannt ist, eine Betätigungseinrichtung zum wahlweisen Betätigen der ersten oder/und der zweiten Reibungskupplungsanordnung im Einrück- bzw. Ausrücksinne in der Art eines hydraulischen Doppel-Nehmerzylinders (Doppel-CSC) vorzusehen.

Übergeordnetes Ziel ist es, eine Betätigungseinrichtung vorzusehen, die eine voneinander unabhängige Betätigung der beiden Kupplungsanordnungen erlaubt, ohne viel Bauraum im Antriebsstrang einzunehmen. Die bisher verwendeten hydraulischen Doppel-CSCs sind durchaus bauraumsparend, haben aber den Nachteil, dass in die Getriebegehäuseglocke unter Druck stehendes Hydrauliköl zuzuführen ist, so dass Probleme im Zusammenhäng mit Ölleckagen entstehen können. Insbesondere können pulsierende Druckbeaufschlagungen von Dichtungen, insbesondere bei so genannten Einrück-Kupplungen, also Kupplungen vom NORMALERWEISE-OFFEN-Typ, die zum Einrücken mit Einrückkräften beaufschlagt werden müssen, zu den problembehafteten Leckagen führen.

Insbesondere bei Kupplungsanordnungen des genannten NORMALERWEISE-OFFEN-Typs ergibt sich überdies das Problem, dass axiale Gegenkräfte zu den von der Betätigungsanordnung ausgeübten, in die Kupplungseinrichtung eingeleiteten Betätigungskräften abzustützen sind. Die Abstützung dieser Gegenkräfte über die Abtriebswelle (ggf. Kurbelwelle) der Antriebseinheit ist problematisch, da die Lager der Abtriebswelle übermäßig belastet werden könnten. Es hat sich gezeigt, dass es bei herkömmlichen Doppel-CSCs konstruktiv relativ schwierig ist, eine andere Art der Abstützung der Gegenkräfte vorzusehen.

Vor dem geschilderten Hintergrund schlägt die Erfindung vor eine Betätigungseinrichtung für eine im Antriebsstrang eines Kraftfahrzeugzeugs angeordnete Mehrfach-Reibungskupplungseinrichtung, ggf. Doppel-Reibungskupplungseinrichtung, zum Einleiten von Betätigungskräften, insbesondere Einrück- oder Ausrückkräften, in die Reibungskupplungseinrichtung, um wahlweise eine erste oder/und eine zweite Reibungskupplungsanordnung der Reibungskupplungseinrichtung im Einrück- oder Ausrücksinne zu betätigen. Die Betätigungseinrichtung umfasst wenigstens ein der ersten Reibungskupplungsanordnung zugeordnetes erstes Betätigungsglied und wenigstens ein der zweiten Reibungskupplungsanordnung zugeordnetes zweites Betätigungsglied, die relativ zu wenigstens einem axial im Wesentlichen feststehenden Stützglied zum Ausüben der Betätigungskräfte axial verstellbar sind und jeweils zu einem der jeweiligen Kupplungsanordnung zugeordneten Aktuator gehören oder unter Vermittlung eines der jeweiligen Kupplungsanordnung zugeordneten Aktuators axial relativ zum Stützglied verstellbar sind. Die erfindungsgemäße Betätigungseinrichtung zeichnet sich durch einen derartigen Eingriff zwischen dem ersten und dem zweiten Betätigungsglied einerseits und dem Stützglied andererseits aus, dass eine unter Vermittlung des jeweiligen Aktuators dem jeweiligen Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird.

Es hat sich allerdings gezeigt, dass der Erfindungsgedanke auch im Zusammenhang mit einer "Einfach-Kupplungsanordnung", die nur eine Reibungskupplungsanordnung aufweist, vorteilhaft ist. Demgemäß schlägt die Erfindung nach einem allgemeineren Aspekt vor eine Betätigungseinrichtung für eine im Antriebsstrang eines Kraftfahrzeugzeugs angeordnete Reibungskupplungseinrichtung zum Einleiten von Betätigungskräften, insbesondere Einrück- oder Ausrückkräften, in die Reibungskupplungseinrichtung, um wenigstens eine Reibungskupplungsanordnung der Reibungskupplungseinrichtung im Einrück- oder Ausrücksinne zu betätigen, umfassend wenigstens ein der oder einer Reibungskupplungsanordnung zugeordnetes Betätigungsglied, das relativ zu wenigstens einem axial im Wesentlichen feststehenden Stützglied zum Ausüben der Betätigungskräfte axial verstellbar ist und zu einem der Kupplungsanordnung zugeordneten Aktuator gehört oder unter Vermittlung eines der Kupplungsanordnung zugeordneten Aktuators axial relativ zum Stützglied verstellbar ist. Die erfindungsgemäße Betätigungseinrichtung nach dem allgemeineren Aspekt zeichnet sich durch einen derartigen Eingriff zwischen dem Betätigungsglied und dem Stützglied aus, dass eine unter Vermittlung des Aktuators dem Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird.

Die erfindungsgemäße Betätigungseinrichtung kann bauraumsparend und kostengünstig hergestellt werden. Ferner ist eine hohe Funktionssicherheit (Betriebssicherheit) erreichbar.

Betreffend den Eingriff zwischen dem Betätigungsglied bzw. dem jeweiligen Betätigungsglied und dem Stützglied wird vorgeschlagen, dass das Stützglied und das Betätigungsglied bzw. das Stürzglied und das erste oder/und zweite Betätigungsglied in gegenseitigem Spindel- oder Gewindeeingriff oder in gegenseitigem Kurve-Kurvenfolger-Eingriff oder Rampe-Gegenrampe-Eingriff stehen.

Eine bevorzugte Möglichkeit ist, dass von dem Stützglied und dem (jeweiligen) Betätigungsglied ein Glied ein ein- oder mehrgängiges Außengewinde in einer im Wesentlichen kreiszylindrischen Außenumfangsfläche und das andere Glied ein ein- oder mehrgängiges Innengewinde im einer im Wesentlichen kreiszylindrischen Innenumfangfläche aufweist, wobei das Außengewinde und das Innengewinde in direktem gleitenden Eingriff oder in durch wenigstens einen Roll- oder Wälzkörper oder durch wenigstens einen Gleitkörper vermittelten Eingriff miteinander stehen. Dabei können das Innengewinde und das Außengewinde vorteilhaft als Flachgewinde, Trapezgewinde oder Rundgewinde ausgeführt sein. Eine besonders reibungsarme Ausgestaltung zeichnet sich dadurch aus, dass das Innengewinde und das Außengewinde mit mehreren als Roll- oder Wälzkörper dienenden Kugeln sowie ggf. mit einem in dem anderen Glied ausgebildeten Kugelrücklauf einen Kugelgewindetrieb bilden. Der Kugelgewindeantrieb kann vorteilhaft nach den Vorschlägen der am 21.07.2000 eingereichten deutschen Patentanmeldung Nr. 100 35 516.1 der Anmelderin ausgeführt sein.

Eine vorteilhafte Ausführungsvariante zeichnet sich dadurch aus, dass von dem Stützglied und dem (jeweiligen) Betätigungsglied ein Glied ein einoder mehrgängiges Außengewinde in einer im Wesentlichen kreiszylindrischen Außenumfangsfläche oder ein ein- oder mehrgängiges Innengewinde in einer im Wesentlichen kreiszylindrischen Innenumfangfläche und das andere Glied wenigstens einen an diesem Glied axial abgestützten Gewindeeingreifer aufweist, der von einer Innenumfangsfläche des anderen Glieds nach radial innen vorsteht und in das Außengewinde eingreift bzw. von einer Außenumfangsfläche nach radial außen vorsteht und in das Innengewinde eingreift. Dabei kann der Gewindeeingreifer beispielsweise als Roll- oder Wälzkörper oder als Gleitkörper ausgeführt sein. Vorzugsweise ist der Gewindeeingreifer am anderen Glied in einer zugeordneten Führungs-Ringnut in Umfangsrichtung beweglich geführt.

Als besonders bevorzugt wird vorgeschlagen, dass das Außengewinde bzw. das Innengewinde eine in axialer Richtung sich ändernde Gewindesteigung aufweist. Auf diese Weise kann beispielsweise eine gewünschte Beziehung zwischen einem Aktuatorweg und einem Kupplungsmoment erreicht werden, beispielsweise eine lineare Beziehung, die etwa für eine gute Regelgüte (konstante Auflösung) vorteilhaft ist. Es können insbesondere nichtlineare Federkennlinien, beispielsweise Belagfederkennlinien, durch eine entsprechende Änderung der Gewindesteigung kompensiert werden.

Eine andere Möglichkeit betreffend den Eingriff zwischen dem (jeweiligen) Betätigungsglied und dem Stützglied ist, dass das Stützglied und das (jeweilige) Betätigungsglied mit sich in Umfangsrichtung erstreckenden, in Umfangsrichtung axial ansteigenden Rampenbereichen ausgeführt sind, die - ggf. unter Vermittlung von Wälz- oder Rollkörpern - die Drehbewegung in die Translationsbewegung umsetzen. Es wird beispielsweise auf den Inhalt der Offenlegungsschriften DE 195 47 081 A1 und EP 0 478 427 A1 verwiesen, deren Vorschläge vorteilhaft auch im Zusammenhang mit einer erfindungsgemäßen Betätigungseinrichtung anwendbar sind.

Eine weitere vorteilhafte Möglichkeit ist, dass von dem Stützglied und dem (jeweiligen) Betätigungsglied ein Glied wenigstens eine sich in Umfangsrichtung erstreckende, in Umfangsrichtung axial ansteigende Führungskurve und das andere Glied wenigstens einen mit der Führungskurve direkt oder indirekt in Eingriff stehenden oder bringbaren Kurvenfolger aufweist, die - gegebenfalls unter Vermittlung einer Gleitlager- oder Wälzlageranordnung - die Drehbewegung in die Translationsbewegung umsetzen. Eine entsprechende Betätigungsglied- und Stützglied-Anordnung kann beispielsweise in Form von Blechteilen bereitgestellt werden, wodurch sich große Kostenvorteile ergeben.

Die Führungskurve kann in Umfangsrichtung linear axial ansteigen. Man kann vorteilhaft aber auch vorsehen, dass die Führungskurve in Umfangsrichtung nichtlinear axial ansteigt, beispielsweise um eine gewünschte Beziehung zwischen dem Aktuatorweg und dem Kupplungsmoment, insbesondere eine im Wesentlichen lineare Beziehung (vgl. die obigen Ausführungen) vorzusehen.

Eine bevorzugte Ausgestaltung der Betätigungseinrichtung zeichnet sich dadurch aus, dass in einer Außenumfangsfläche oder/und Innenumfangsfläche des einen Glieds wenigstens eine sich in Umfangsrichtung erstreckende, die Führungskurve definierende Aussparung oder Öffnung vorgesehen ist, die als Kulisse dient, in die der oder ein zugeordnete(r), als Kulissenfolger ausgebildeter Kurvenfolger eingreift. Es ist nicht zwingend, aber bevorzugt, dass das (jeweilige) Betätigungsglied die Führungskurve bzw. die Kulisse aufweist.

Das Stützglied und das Betätigungsglied bzw. die Betätigungsglieder können von koaxial zueinander angeordneten Hülsen gebildet sein, beispielsweise von Blechhülsen. Dabei kann das oder wenigstens ein Betätigungsglied von einer Außenhülse gebildet sein, die eine als Stützglied dienende Stützhülse zumindest bereichsweise radial außen umschließt. Ferner kann das oder wenigstens ein Betätigungsglied von einer Innenhülse gebildet sein, wobei eine/die als Stützglied dienende Stützhülse die Innenhülse zumindest bereichsweise radial außen umschließt.

Eine insbesondere, aber nicht ausschließlich im Zusammenhang mit der Ausbildung der Betätigungseinrichtung mit einer Führungskurve besonders vorteilhafte Ausführungsart der Betätigungseinrichtung zeichnet sich dadurch aus, dass als Stützglied eine radial äußere Stütz-Außenhülse und eine radial innere Stütz-Innenhülse vorgesehen sind, und dass das oder wenigstens ein Betätigungsglied von einer Zwischenhülse gebildet ist, die radial zwischen der Stütz-Außenhülse und der Stütz-Innenhülse angeordnet ist. Bezug nehmend auf die Ausgestaltung der Betätigungseinrichtung mit der Führungskurve kann die Zwischenhülse mit wenigstens einer Führungskurve (vorzugsweise in Form einer Kulisse) ausgeführt sein, die direkt oder indirekt mit einem sich radial zwischen der Stütz-Außenhülse und der Stütz-Innenhülse erstreckenden Kurvenfolge in Eingriff steht oder in Eingriff bringbar ist. Der Kurvenfolger kann einen an der Stütz-Außenhülse oder/und der Stütz-Innenhülse gehaltenen Bolzen umfassen.

Wie schon erwähnt, können das Stützglied und das Betätigungsglied bzw. die Betätigungsglieder als Blechteile ausgeführt sein. Dies gilt grundsätzlich für alle Ausführungsvarianten, ist aber für die erläuterte Ausführung der Betätigungseinrichtung mit wenigstens einer Führungskurve besonders zweckmäßig.

Eine andere Möglichkeit ist, dass das Stützglied und das Betatigungsglied bzw. die Betätigungsglieder als Kunststoffmaterialteile ausgeführt sind, wobei von dem Stützglied und dem Betätigungsglied bzw. von einem jeweiligen Stützglied-Betätigungsglied-Paar vorzugsweise ein Glied aus einem weicheren und das andere Glied aus einem härteren Kunststoffmaterial hergestellt ist. Ferner kann man vorsehen, dass von dem Stützglied und dem Betätigungsglied bzw. von einem jeweiligen Stützglied-Betätigungsglied-Paar ein Glied aus einem Metallmaterial, vorzugsweise aus Aluminium, und das andere Glied aus einem Kunststoffmaterial hergestellt ist.

Betreffend das verwendete Kunststoffmaterial wird vorgeschlagen, dass wenigstens eines der Glieder bzw. dass das andere Glied zumindest bereichsweise aus einem gleitmodifizierten oder/und selbstschmierenden Kunststoffmaterial hergestellt ist. Als reibungsmindernde Materialien kommen insbesondere PTFE, Molybdänphosphit und $MOS_2$ in Betracht. Es wird beispielsweise an die Kunststoffe Polysulfon mit einem PTFE-Anteil von 15 % und Polyphthalamid mit einem PTFE-Anteil von 15 % gedacht (PTFE = Poly-Tetra-Fluor-Ethylen). Soweit Materialkombinationen aus einem harten und einem weichen Material vorgesehen werden sollen (dies ist anzustreben), kommen beispielsweise die Materialpaarungen Duroplast-Aluminium und Duroplast-Thermoplast in Betracht.

Dem Betätigungsglied bzw. den Betätigungsgliedern kann (jeweils) ein translatorischer Aktuator zugeordnet sein, der mit dem Betätigungsglied über eine eine translatorische in eine rotatorische Bewegung umsetzende Koppelmechanik bewegungsverkoppelt oder bewegungsverkoppelbar ist. Hierzu wird speziell vorgeschlagen, dass die Koppelmechanik ein durch den Aktuator translatorisch antreibbares, an der Betätigungsglied oder einem Hebelabschnitt desselben angreifendes und in einer zur Drehachse im Wesentlichen orthogonalen Ebene schwenkbares Zug- oder/und Schubglied umfasst, über das eine im Wesentlichen tangential gerichtete Betätigungskraft auf das Betätigungsglied übertragbar ist. Bei dem Aktuator kann es sich beispielsweise um einen Aktuator auf Grundlage eines hydraulischen Nehmerzylinders handeln.

Eine andere vorteilhafte Möglichkeit ist, dass dem (jeweiligen) Betätigungsglied ein rotatorischer Aktuator zugeordnet ist, der mit dem Betätigungsglied direkt oder über eine Koppelmechanik bewegungsverkoppelt oder bewegungsverkoppelbar ist. Es wird beispielsweise an einen rotatorischen Aktuator auf Grundlage eines Elektromotors gedacht.

Der rotatorische Aktuator kann ein Ausgangsteil aufweisen, welches eine zur Drehachse des Betätigungsglieds zumindest näherungsweise parallele Drehachse aufweist. Man kann vorteilhaft ein Zahnradgetriebe vorsehen, über das der Aktuator und das Betätigungsglied miteinander bewegungsverkoppelt oder bewegungsverkoppelbar sind. Beispielsweise kann das Zahnradgetriebe ein aktuatorseitiges Zahnrad als Eingangsteil und ein betätigungsgliedseitiges Zahnrad oder einen betätigungsgliedseitigen Zahnradsektor oder Zahnkranz oder Zahnkranzsektor als Ausgangsteil aufweisen, wobei das Eingangsteil gleichzeitig das Ausgangsteil des Aktuators bilden kann und das Ausgangsteil integral oder einteilig mit dem Betätigungsglied ausgeführt sein kann.

Eine andere vorteilhafte Möglichkeit ist, dass der Aktuator ein Ausgangsteil aufweist, welches eine zur Drehachse des Betätigungsglieds zumindest näherungsweise orthogonale Drehachse aufweist. Man kann vorteilhaft vorsehen, dass der Aktuator und das Betätigungsglied über ein Schneckengetriebe bewegungsverkoppelt oder bewegungsverkoppelbar sind. Das Schneckengetriebe kann eine aktuatorseitige Schnecke als Eingangsteil und ein betätigungsgliedseitiges Zahnrad oder einen betätigungsgliedseitigen Zahnradsektor oder Zahnkranz oder Zahnkranzsektor als Ausgangsteil aufweisen, wobei das Eingangsteil gleichzeitig das Ausgangsteil des Aktuators bilden kann und das Ausgangsteil integral oder einteilig mit dem Betätigungsglied ausgeführt sein kann.

Unabhängig von der Funktionsweise des Aktuators und der Art und Weise der Verkopplung des Aktuators mit dem Betätigungsglied wird weiterbildend vorgeschlagen, dass einem/dem Ausgangsteil des Aktuators oder/und einer Momentenübertragungskomponente der Koppelmechanik bzw. des Getriebes oder/und dem Betätigungsglied eine ggf. als Reibungsbremse ausgeführte Arretierung zugeordnet ist, die dafür ausgelegt ist, unabhängig von einem momentanen Aktivierungszustand des Aktuators einen momentanen Kupplungsbetätigungszustand entsprechend einer momentanen Axialund Drehposition des Betätigungsglieds zu halten. Hierdurch kann der momentane Kupplungsbetätigungszustand auch dann gehalten werden, sollte der beispielsweise elektromotorische Aktuator stromlos werden. Eine vorteilhafte Ausgestaltung der Arretierung zeichnet sich dadurch aus, dass diese aktivierbar und deaktivierbar ist, beispielsweise vermittels eines elektromagnetischen Stellglieds, das eine Reibungsbremse in Reibungseingriff mit einer zugeordneten Komponente bringt bzw. diesen Reibungseingriff aufhebt. Das Stellglied sollte derart ausgebildet sein, dass bei einem Ausfall von Strom die Arretierung zwangsweise aktiviert wird bzw. die Aktivierung aufrecht erhalten wird.

Es sei noch angemerkt, dass die Arretierungsfunktion auch inhärent vorhanden sein kann, ohne dass eine gesonderte Arretierung vorhanden ist. Beispielsweise kann eine Koppelmechanik, beispielsweise ein Schneckengetriebe, selbsthemmend ausgeführt sein. Insbesondere kann es sein, dass die von einer als Reibungsbremse ausgeführten Arretierung aufgebrachten Reibungskräfte zusammen mit Hemmkräften in der Koppelmechanik oder/und dem Aktuator zusammenwirken, um die beschriebene Arretierungsfunktion vorzusehen, also unabhängig vom momentanen Aktivierungszustand des Aktuators den momentanen Kupplungsbetätigungszustand zu halten.

Für die Funktion der Betätigungseinrichtung ist die Abstützung des Stützglieds gegen Verdrehen von Bedeutung. Es besteht grundsätzlich viele Möglichkeiten, wie diese Abstützung bewerkstelligt werden kann. Vorzugsweise weist das Stützglied wenigstens einen Drehabstützabschnitt auf, der mit wenigstens einem zugeordneten Gegen-Drehabstützabschnitt einer gegenüber der Kupplungseinrichtung stationären Abstützbasis, insbesondere eines Gehäuses eines Getriebes des Antriebsstrangs, in formschlüssigen Drehabstützeingriff steht oder bringbar ist, um das Stützglied gegen Verdrehung abzustützen. Ferner kann das Stützglied wenigstens einen Axialsicherungsabschnitt aufweisen, der mit wenigstens einem zugeordneten Gegen-Axialsicherungsabschnitt einer gegenüber der Kupplungseinrichtung stationären Abstützbasis, insbesondere eines Gehäuses eines Getriebes des Antriebsstrangs, in formschlüssigen Axialsicherungseingriff steht oder bringbar ist, um das Stützglied im Antriebsstrang axial zu sichern. In diesem Zusammenhang ist es besonders bevorzugt, dass der Drehabstützabschnitt und der Gegen-Drehabstützabschnitt zugleich als Axialsicherungsabschnitt und Gegen-Axialsicherungsabschnitt dienen. Eine vorteilhafte Ausgestaltung zeichnet sich dadurch aus, dass der Drehabstützabschnitt und der Gegen-Drehabstützabschnitt in bajonettverschlussartigen Eingriff bringbar sind.

Wenn vorstehend von axialer Sicherung des Stützglieds gesprochen wird, so ist hiermit nicht unbedingt gemeint, dass die im Zuge einer Kupplungsbetätigung am Stützglied auftretenden axialen Gegenkräfte über den Axialsicherungsabschnitt an der Abstützbasis abgestützt werden. Bevorzugt ist eine Abstützung dieser axilen Gegenkräfte an der Kupplungseinrichtung, vorzugsweise derart, dass in der Kupplungseinrichtung auftretende axiale Gegenkräfte und in der Betätigungseinrichtung auftretenden axiale Gegenkräfte sich zumindest teilweise, vorzugsweise im Wesentlichen vollständig gegenseitig aufheben, wie im Folgenden noch näher erläutert wird.

Die erfindungsgemäße Betätigungseinrichtung kann vorteilhaft eine als Einheit handhabbare Betätigungseinheit aufweisen, die das wenigstens eine Stützglied und das wenigstens eine Betätigungsglied umfasst.

Die Erfindung betrifft nach einem zweiten Aspekt allgemein eine Betätigungseinheit für eine im Antriebsstrang eines Kraftfahrzeugs zwischen einer Antriebseinheit und einem Getriebe angeordnete Reibungskupplungseinrichtung zum Einleiten von Betätigungskräften, insbesondere Einrück- oder Ausrückkräften, in die Reibungskupplungseinrichtung, um wenigstens eine Reibungskupplungsanordnung der Reibungskupplungseinrichtung im Einrück- oder Ausrücksinne zu betätigen, samt einer zugehörigen getriebeseitigen Halterung, wobei die Betätigungseinheit wenigstens ein der oder einer Reibungskupplungsanordnung zugeordnetes Betätigungsglied umfasst, das relativ zu wenigstens einem axial im Wesentlichen feststehenden Stützglied zum Ausüben der Betätigungskräfte axial verstellbar ist und zu einem der Kupplungsanordnung zugeordneten Aktuator gehört oder unter Vermittlung eines der Kupplungsanordnung zugeordneten Aktuators axial relativ zum Stützglied verstellbar ist, und wobei die getriebeseitige Halterung eine Sicherung der Betätigungseinheit gegen ein Verdrehen im Zuge einer Kupplungsbetätigung vorsieht und gewünschtenfalls (wenn vorgesehen) eine axiale Bewegung der Betätigungseinheit relativ zum Getriebe zulässt. Es kann sich bei der angesprochenen Betätigungseinheit um eine erfindungsgemäße Betätigungseinheit nach dem vorstehend behandelten ersten Aspekt der. Erfindung oder auch um eine herkömmliche Betätigungseinrichtung, beispielsweise auf Grundlage eines hydraulischen Einfach-Nehmerzylinders (Einfach-CSC) im Falle einer Einfachkupplung oder eines hydraulischen Doppel-Nehmerzylinders (Doppel-CSC) im Falle einer Doppelkupplung handeln.

Bekannt ist eine getriebeseitige Fixierung einer derartigen Betätigungseinheit mittels einer Anzahl von axial vom Getriebe vorstehenden Stiften, beispielsweise drei Stiften. Die Stifte lassen eine Axialbewegung der Betätigungseinheit relativ zum Getriebe zu. Tritt im Zuge einer Kupplungsbetätigung ein im Sinne eines Verdrehens wirkendes Reaktionsmoment, etwa aus einer tangentialen Betätigung eines Rampeneinrückers oder dergleichen, oder ein im Sinne eines Verdrehens wirkendes Drehmitnahmemoment in Folge der Kupplungsrotation auf, so können diese Stifte das Reaktionsmoment bzw. Mitnahmemoment aufnehmen und so eine Verdrehung der Betätigungseinheit (ggf. auch als Betätigungsmodul bezeichenbar) relativ zum Getriebe verhindern.

Der herkömmliche Lösungsansatz ist insoweit nachteilig, als dass die Stifte unter Umständen hoch belastet werden. Ferner resultiert in der Regel eine relativ steife Verbindung zwischen der Betätigungseinheit und dem Getriebe und, unter Vermittlung der Betätigungseinheit, zwischen dem Getriebe und der jeweiligen Kupplungseinrichtung, wodurch Schwingungen oder Spannungen in der Betätigungseinheit auftreten können, beispielsweise in Folge eines Achsversatzes zwischen der Antriebseinheit (Motor) und dem Getriebe. Dies kann zur Folge haben, dass die Taumeleigenfrequenz der gesamten Anordnung angehoben wird, was in der Regel nicht gewünscht ist.

Ein weiterer Nachteil der herkömmlichen Lösung ist, dass bei der Montage der Betätigungseinheit im Antriebsstrang das Auffädeln der Betätigungseinheit auf die getriebeseitigen Stifte problembehaftet ist. Es erscheint zwar im Prinzip denkbar, die Stifte und zugehörigen Aufnahmeöffnungen der Betätigungseinrichtung mit Einfuhrschrägen oder/und vergleichsweise großem gegenseitigem Spiel auszuführen. In der Praxis scheidet diese im Prinzip denkbare Lösung bauraumbedingt und wegen der zu gewährleistenden Traglänge bzw. Belastbarkeit in der Regel aber aus.

Aufgabe der Erfindung ist, eine Betätigungseinheit samt getriebeseitiger Halterung der angesprochenen Art bereitzustellen, die die angesprochenen Probleme oder Nachteile nach dem herkömmlichen Lösungsansatz vermeidet oder zumindest deutlich mildert. Zur Lösung dieser Aufgabe wird vorgeschlagen, dass die getriebeseitige Halterung eine am Getriebe drehfest fixierte oder fixierbare Halterungsaufnahme aufweist, in die ein an die Halterungsaufnahme querschnittsangepasster getriebeseitiger Einsteckabschnitt der Betätigungseinheit, der mit dem Stützglied direkt oder indirekt verbunden oder mit diesem einteilig ist, axial eingesteckt oder einsteckbar ist, wobei die Halterungsaufnahme wenigstens eine Innenoberfläche aufweist, an der wenigstens eine Außenoberfläche des Einsteckabschnitts gegen Verdrehen direkt oder indirekt abstützbar ist.

Die erfindungsgemäße Halterung, in die die Betätigungseinheit mit ihrem Einsteckabschnitt axial eingesteckt bzw. einsteckbar ist, ermöglicht vermittels eines direkten oder indirekten Abstützeingriffes zwischen der Innenoberfläche der Halterungsaufnahme und der Außenoberfläche des Einsteckabschnitts eine zuverlässige Sicherung gegen ein Verdrehen der Betätigungseinheit relativ zum Getriebe, wobei bei entsprechender Ausbildung der genannten Flächen insgesamt hohe Abstützkräfte aufgenommen werden können, ohne dass lokal eine übermäßige Flächenbelastung auftritt. Dabei kann die Betätigungseinheit axial im Prinzip frei beweglich sein, so dass die Betätigungseinheit, ggf. zusammen mit einem zugehörigen Kupplungsmodul, axiale Bewegungen, die beispielsweise aus einem Kurbelwellenaxialspiel resultieren können, mitmachen kann, ohne dass ungewünschte Axiallasten, etwa an der Kurbelwelle, auftreten.

Die erfindungsgemäße Betätigungseinheit bzw. Betätigungseinheit-Halterung-Kombination ist besonders tauglich für eine Reibungskupplungseinrichtung des NORMALERWEISE-OFFEN-Typs, kann vorteilhaft aber auch bei einer Reibungskupplungseinrichtung des NORMALERWEISE-GESCHLOSSEN-Typs angewendet werden.

Man kann die Innenoberfläche und die Außenoberfläche vorteilhaft derart ausführen, dass die Betätigungseinheit vermittels eines direkten oder indirekten Zentrierungseingriffs zwischen der Innenoberfläche und der Außenoberfläche am Getriebe zentrierbar ist.

Eine besonders bevorzugte Ausgestaltung zeichnet sich durch eine derartige Abstimmung der Innenoberfläche und der Außenoberfläche aufeinander aus, dass der Bedienungseinheit Bewegungsspiel zumindest in radialer Richtung verbleibt. Hierdurch kann etwa ein Achsversatz zwischen Antriebseinheit (Motor) und Getriebe, wie oben angesprochen, ohne Verspannungen aufgenommen werden. In diesem Zusammenhang, aber auch allgemein, wird ferner vorgeschlagen, dass die Abstützung bzw. der Zentrierungseingriff vermittels wenigstens eines elastischen Zwischenelements erfolgt. Mittels des elastischen Zwischenelements kann die Betätigungseinheit in eine durch die getriebeseitige Halterung definierte Zentrierungsstellung vorgespannt sein, gleichwohl aber Achsversätze oder dergleichen noch ausgleichen.

Für einen besonders sicheren, einfach herstellbaren und hohe Flächenbelastungen vermeidenden Eingriff zwischen der Halterung und der Betätigungseinheit wird vorgeschlagen, dass die Innenoberfläche und die Außenoberfläche einen Austrittsbereich für wenigstens eine Getriebeeingangswelle zumindest bereichsweise, vorzugsweise insgesamt über einem Umfangswinkel von wenigstens etwa 90°, höchstvorzugsweise von wenigstens etwa 180°, noch stärker bevorzugt von wenigstens etwa 270° radial weiter außen umgeben. Die Innenoberfläche und die Außenoberfläche sollten hierbei einen derartigen Verlauf in Umfangsrichtung haben, dass die Abstützung über einem möglichst großen Teilwinkel, vorzugsweise über den gesamten Umfangswinkel erfolgt, also lokale Flächenabschnitte der Innenoberfläche und der Außenoberfläche jeweils von einem kreiszylindrischen Verlauf bezogen auf die Drehachse abweichen und so die Abstützung gegen Verdrehung liefern können. Idealerweise ist der Verlauf der Innenoberfläche und der Außenoberfläche derart, dass es nur eine Relativdrehstellung oder einen Relativdrehstellungsbereich zwischen Halterung und Betätigungseinheit gibt, in der der Eingriff herstellbar ist.

Um die Betätigungseinheit mit ihrem Einsteckabschnitt problemlos in die getriebeseitige Halterung einstecken zu können, kann die Innenoberfläche der getriebeseitigen Halterung zumindest bereichsweise als Einfädel-Oberfläche ausgeführt sein, mittels der eine Axialbewegung der hieran angreifenden, zu montierenden Betätigungseinheit in eine die Betätigungseinheit einer radialen Sollstellung annähernde Radialbewegung der Betätigungseinheit umsetzbar ist. Vorzugsweise ist die Einfädeloberfläche in Bezug auf die Ausgestaltung des Einsteck-Abschnitts derart ausgeführt, dass in gewissem Maße die Axialbewegung auch in eine die Betätigungseinheit einer Soll-Drehstellung relativ zum Getriebe annähernde Drehbewegung der Betätigungseinheit umsetzbar ist.

Eine zweckmäßige Ausgestaltung zeichnet sich dadurch aus, dass die Aufnahme wenigstens eine die Innenoberfläche aufweisende Halterungswandung aufweist, die einen/den Austrittsbereich für wenigstens eine Getriebeeingangswelle zumindest bereichsweise radial weiter außen umgibt. Der Einsteckabschnitt der Betätigungseinheit kann wenigstens einen gegenüber dem Stützglied radial vorstehenden, vorzugsweise als Flansch ausgebildeten Eingriffsbereich aufweisen, an dem die Außenoberfläche ausgebildet ist. Die getriebeseitige Halterung kann integraler Bestandteil des Getriebegehäuses sein und beispielsweise als entsprechend ausgeführte Mulde im Getriebegehäuse ausgeführt sein oder wenigstens eine einteilig am Getriebegehäuse vorgesehene, hiervon vorstehende Halterungswandung umfassen. Eine demgegenüber bevorzugte Möglichkeit ist aber die Ausführung der getriebeseitigen Halterung als gesondertes Bauteil oder gesonderte Bauteilgruppe, die am Getriebe drehfest und vorzugsweise axial fest angebracht oder anbringbar ist.

Generell ist bevorzugt, dass die Halterung einteilig zusammenhängend ausgeführt ist. Man kann die Halterung zweckmäßig schalenähnlich ausführen. Eine entsprechende Halterung kann dann zutreffend als Halterungsschale oder Halterungskorb bezeichenbar sein.

Der Einsteckabschnitt kann integraler, ggf. einteiliger Bestandteil des Stützglieds oder - bevorzugt - als gegenüber dem Stützglied gesondertes Bauteil oder gesonderte Baugruppe ausgeführt und am Stützglied drehfest und vorzugsweise axial fest angebracht oder anbringbar sein.

Die Betätigungseinheit nach dem hier behandelten zweiten Aspekt der Erfindung kann vorteilhaft in Übereinstimmung mit den oben behandelten Erfindungsvorschlägen und Weiterbildungsvorschlägen nach dem ersten Aspekt der Erfindung ausgeführt sein. Es kann demgemäß ein derartiger Eingriff zwischen dem Betätigungsglied und dem Schutzglied vorgesehen sein, dass eine unter Vermittlung des Aktuators dem Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird.

Die Betätigungseinheit kann für eine Einfach-Reibungskupplungseinrichtung vorgesehen sein. In diesem Fall wird die Betätigungseinheit in der Regel genau ein Betätigungsglied umfassen. Ferner kann die Betätigungseinheit für eine Mehrfach-Reibungskupplungseinrichtung, insbesondere Doppel-Reibungskupplungseinrichtung, vorgesehen sein und ermöglicht dann wahlweise die Betätigung einer ersten oder/und einer zweiten Reibungskupplungsanordnung der Reibungskupplungseinrichtung im Einrück-oder Ausrücksinne. Hierzu kann die Betätigungseinheit wenigstens ein der ersten Reibungskupplungsanordnung zugeordnetes erstes Betätigungsglied und wenigstens ein der zweiten Reibungskupplungsanordnung zugeordnetes zweites Betätigungsglied aufweisen, die relativ zu dem oder wenigstens einem axial im Wesentlichen feststehenden Stützglied zum Ausüben der Betätigungskräfte axial verstellbar sind und jeweils zu einem der jeweiligen Kupplungsanordnung zugeordneten Aktuator gehören oder unter Vermittlung eines der jeweiligen Kupplungsanordnung zugeordneten Aktuators axial relativ zum Stützglied verstellbar sind. Entsprechend dem Erfindungsvorschlag nach dem ersten Aspekt der Erfindung kann vorteilhaft ein derartiger Eingriff zwischen dem ersten und zweiten Betätigungsglied einerseits und dem Stützglied andererseits vorgesehen sein, dass eine unter Vermittlung des jeweiligen Aktuators dem jeweiligen Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird.

Weitere Weiterbildungsvorschläge ergeben sich aus den obigen Weiterbildungsvorschlägen zur erfindungsgemäßen Betätigungseinrichtung nach dem ersten Aspekt der Erfindung.

Die Erfindung betrifft ferner eine Betätigungseinheit für eine erfindungsgemäße Kombination (Betätigungseinheit samt getriebeseitiger Halterung). Es wird auf die sich auf die Betätigungseinheit beziehenden Merkmale der erfindungsgemäßen Kombination gemäß vorstehenden Erläuterungen verwiesen.

Die Erfindung betrifft ferner eine getriebeseitige Halterung für eine erfindungsgemäße Kombination (Betätigungseinheit samt getriebeseitiger Halterung). Es wird auf die sich auf die getriebeseitige Halterung beziehenden Merkmale der erfindungsgemäßen Kombination gemäß vorstehenden Erläuterungen verwiesen.

Die Erfindung betrifft speziell auch eine Kupplungseinrichtung, ggf. Doppeloder Mehrfach-Kupplungseinrichtung, für die Anordnung in einem Kraftfahrzeug-Antriebsstrang zwischen einer Antriebseinheit und einem Getriebe, umfassend eine Gehäuseanordnung, welche mit einem Antriebsorgan zur gemeinsamen Drehung um eine Drehachse gekoppelt oder koppelbar ist, wenigstens eine einer Getriebeeingangswelle zugeordnete Kupplungsanordnung mit wenigstens einer Anpressplatte, durch welche wenigstens ein Reibbereich wenigstens einer Kupplungsscheibe gegen einen mit der Gehäuseanordnung drehbaren Widerlagerbereich pressbar ist, eine Betätigungsanordnung zum Ein- und Ausrücken der Kupplungsanordnung unter Vermittlung eines der Kupplungsanordnung zugeordneten Betätigungsglieds der Betätigungsanordnung, das relativ zu wenigstens einem axial im Wesentlichen feststehenden Stützglied der Betätigungsanordnung axial verstellbar ist und zu einem der Kupplungsanordnung zugeordneten Aktuator gehört oder unter Vermittlung eines der Kupplungsanordnung zugeordneten Aktuators axial relativ zum Stützglied verstellbar ist. Nach der Erfindung wird vorgeschlagen, dass die Betätigungsanordnung eine das Betätigungsglied und das Stützglied aufweisende erfindungsgemäße Betätigungseinrichtung bzw. Betätigungseinheit, ggf. mit zugehöriger getriebeseitiger Halterung, wie vorangehend beschrieben, umfasst.

Herkömmlich wurden axiale Gegenkräfte aufgrund der axialen Verstellung des Stellglieds relativ zum Stützglied und Gegenkräfte aufgrund der Übertragung der axialen Stell- oder/und Positionierungskräfte unabhängig voneinander abgestützt. So ist es beispielsweise üblich, eine Ausrücklageranordnung samt zugehörigem Aktuator (etwa hydraulischer Nehmerzylinder) am Getriebe axial abzustützen, wohingegen die Kupplungseinrichtung an der Abtriebswelle (insbesondere Kurbelwelle) abgestützt ist. Im Falle eines als Aktuator dienenden hydraulischen Nehmerzylinders könnte ein Kolbenelement samt zugehörigem Ausrück- oder Einrücklager als Betätigungsglied und der den Zylinderraum definierende Zylinderkörper als Stützglied aufgefasst werden.

Im Zusammenhang mit so genannten Mehrfach-Kupplungseinrichtungen, insbesondere Doppel-Kupplungseinrichtungen, die mehrere Kupplungsanordnungen aufweisen, erscheint es vorteilhaft zu sein, von der bisher bei Kupplungen des Reibscheibentyps dominierenden Bauart "NORMALER-WEISE-GESCHOSSEN" abzuweichen und zur Bauart "NORMALERWEISE-OFFEN" überzugehen. Dies bedeutet, dass im Fahrbetrieb ständig axiale Einrückkräfte abgestützt werden müssen. Erfolgt diese axiale Abstützung direkt oder indirekt über die Abtriebswelle der Antriebseinheit, so könnten die Lager der Abtriebswelle auf Dauer übermäßig belastet werden.

Demgegenüber wird vor allem für die Ausführung der Kupplungseinrichtung mit wenigstens einer Kupplungsanordnung vom NORMALERWEISE-OFFEN-Typ, aber auch für eine Ausführung der Kupplungseinrichtung mit wenigstens einer Kupplungsanordnung von NORMALERWEISE-GESCHOSSEN-Typ, vorgeschlagen, dass von dem Betätigungsglied entsprechend seiner Axialstellung ausgeübte axiale Stell- oder/und Positionierungskräfte zur Anpressplatte oder/und zu einer der Anpressplatte zugeordneten Federanordnung übertragbar sind, dass bei der axialen Verstellung des Betätigungsglieds relativ zum Stützglied oder/und beim Aufbau der axialen Stell- oder/und Positionierungskräfte induzierte axiale Gegenkräfte unter Vermittlung des Stützglieds abstützbar sind, dass durch die übertragenen axialen Stelloder/und Positionierungskräfte induzierte axiale Gegenkräfte unter Vermittlung der Gehäuseanordnung abstützbar sind, und dass das Stützglied und die Gehäuseanordnung in axialer Abstützbeziehung stehen, derart, dass von der Gehäuseanordnung aufgenommene axiale Gegenkräfte aufgrund der Übertragung von axialen Stell- oder/und Positionierungskräften und vom Stützglied aufgenommene axiale Gegenkräfte aufgrund der axialen Verstellung des Betätigungsglieds relativ zum Stützglied bzw. des Aufbaus der axialen Stell- oder/und Positionierungskräfte sich zumindest teilweise, vorzugsweise im Wesentlichen vollständig gegenseitig aufheben. Erfindungsgemäß heben sich die genannten axialen Gegenkräfte zumindest teilweise auf, so dass die Abtriebswelle höchstens nur noch geringfügig axial belastet wird. Idealerweise ist die axiale Abstützbeziehung zwischen dem Stützglied und der Gehäuseanordnung derart, dass ein in sich geschlossener Axialkraftfluss innerhalb der Kupplungseinrichtung erreicht wird.

Eine vorteilhafte Ausführungsform zeichnet sich dadurch aus, dass zwischen einem vorzugsweise deckelartigen Gehäuseabschnitt der Gehäuseanordnung und dem ggf. hülsenartigen Stützglied eine Drehlageranordnung wirksam ist, die axiale Abstützkräfte zwischen dem Gehäuseabschnitt und dem Stützglied überträgt. Die Betätigungsanordnung kann eine der Anpressplatte zugeordnete Betätigungshebelanordnung oder Betätigungsfederanordnung aufweisen, die ggf. am Gehäuseabschnitt gehalten ist. Weiterbildend wird vorgeschlagen, dass der Betätigungshebelanordnung oder Betätigungsfederanordnung ein mit der Gehäuseanordnung drehbarer Abstützbereich zugeordnet ist, an dem die Betätigungshebelanordnung bzw. die Betätigungshebelanordnung direkt oder indirekt axial abgestützt oder abstützbar ist.

Man kann vorteilhaft vorsehen, dass die Gehäuseanordnung, die wenigstens eine Kupplungsanordnung und die Betätigungsanordnung eine Einbau-Baueinheit bilden.

Die Erfindung betrifft ferner eine Kupplungseinrichtung, ggf. Doppel- oder Mehrfach-Kupplungseinrichtung, für die Anordnung in einem Kraftfahrzeug-Antriebsstrang zwischen einer Antriebseinheit und einem Getriebe, umfassend wenigstens eine einer Getriebeeingangswelle zugeordnete, für einen Betrieb unter der Einwirkung einer Betriebsflüssigkeit, insbesondere eines Kühlöls vorgesehene Lamellen-Kupplungsanordnung und eine mit der Kupplungsanordnung in Wirkverbindung stehende oder bringbare, gewünschtenfalls in die Kupplungseinrichtung integrierte Betätigungseinrichtung bzw. Betätigungseinheit zum Ein- und Ausrücken der Kupplungsanordnung unter Vermittlung eines der Kupplungsanordnung zugeordneten Betätigungsglieds der Betätigungseinrichtung bzw. Betätigungseinheit, das relativ zu wenigstens einem axial im Wesentlichen feststehenden Stützglied der Betätigungseinrichtung bzw. Betätigungseinheit axial verstellbar ist und zu einem der Kupplungsanordnung zugeordneten Aktuator gehört oder unter Vermittlung eines der Kupplungsanordnung zugeordneten Aktuators axial relativ zum Stützglied verstellbar ist. Es wird vorgeschlagen, dass es sich bei der Betätigungseinrichtung bzw. Betätigungseinheit um eine erfindungsgemäße Betätigungseinrichtung bzw. Betätigungseinheit, ggf. mit zugehöriger getriebeseitiger Halterung, wie vorangehend beschrieben handelt.

Eine besonders bevorzugte Ausgestaltung der Kupplungseinrichtung zeichnet sich dadurch aus, dass zumindest Eingriffsbereichen des Stützglieds und des (jeweiligen) Betätigungsglieds, die auf Grundlage eines gegenseitigen Eingriffs die Umsetzung der Drehbewegung in die Translationsbewegung vermitteln, Betriebsflüssigkeit zuführbar ist oder im Betrieb zwangsweise zugeführt wird, mit der Wirkung einer Nassschmierung der Eingriffsbereiche. Durch die Nassschmierung lässt sich besonders geringe Reibung realisieren.

Bei den angesprochenen Kupplungseinrichtungen kann es sich jeweils um eine Mehrfach-Kupplungseinrichtung, ggf. Doppel-Kupplungseinrichtung, handeln, die eine einer ersten Getriebeeingangswelle zugeordnete erste Kupplungsanordnung und eine einer zweiten Getriebeeingangswelle zugeordnete zweite Kupplungsanordnung aufweist. Je nach Kupplungstyp handelt es sich bei der jeweiligen Kupplungsanordnung beispielsweise um eine Kupplungsanordnung der Reibscheibenbauart oder um eine Kupplungsanordnung der Lamellenkupplungsbauart.

Die Erfindung betrifft ferner einen Kraftfahrzeug-Antriebsstrang mit einer zwischen einer Antriebseinheit und einem Getriebe angeordneten Kupplungseinrichtung, die eine erfindungsgemäße Betätigungseinrichtung bzw. Betätigungseinheit (ggf. mit zugehöriger getriebeseitiger Halterung) aufweist bzw. der eine erfindungsgemäße Betätigungseinrichtung bzw. Betätigungseinheit (ggf. mit zugehöriger getriebeseitiger Halterung) zugeordnet ist. Es wird insbesondere an die vorangehend angesprochenen erfindungsgemäßen Kupplungseinrichtungen gedacht.

Die Erfindung wird im Folgenden anhand von in den Figuren gezeigten Ausführungsbeispielen näher erläutert.

Fig. 1     zeigt in Fig. 1a) in einer teilgeschnittenen Ansicht ein erstes Ausführungsbeispiel einer erfindungsgemäßen Doppelkupplung in Reibscheibenbauart, die ein an einem Kupplungsgehäuse axial abgestütztes Betätigungsmodul gemäß einer Ausführungsform der Erfindung aufweist, das zur Betätigung der beiden Reibscheiben-Kupplungsanordnungen der Doppelkupplung dient und mit dieser zu einer Baueinheit integriert ist, und in Teilfigur b) einen Ausschnitt einer entsprechenden Schnittansicht gemäß einer anderen, die Drehachse enthaltenen Schnittebene durch die Doppelkupplung.

Fig. 2     zeigt ein weiteres Ausführungsbeispiel einer weitgehend dem Beispiel der Fig. 1 entsprechenden Doppelkupplung in einer Einbausituation in einem Kraftfahrzeug-Antriebsstrang.

Fig. 3     zeigt eine Ausführungsvariante der Doppelkupplung der Fig. 1.

Fig. 4     zeigt in einer schematischen Gesamt-Schnittansicht eine im Wesentlichen der Doppelkupplung der Fig. 3 entsprechende Doppelkupplung der Reibscheibenbauart.

Fig. 5     veranschaulicht eine vorteilhafte Art der Drehsicherung eines erfindungsgemäßen Betätigungsmoduls am Getriebegehäuse, ggf. in der Art eines Bajonettverschlusses, um auch eine axiale Sicherung zu erhalten.

Fig. 6     veranschaulicht eine weitere vorteilhafte Art der Drehsicherung eines erfindungsgemäßen Betätigungsmoduls an einem Getriebegehäuse.

Fig. 7     veranschaulicht eine bevorzugte Art der Antriebsverbindung zwischen einem erfindungsgemäßen Betätigungsmodul und einer zugeordneten Aktuatoranordnung mittels Schneckengetrieben.

Fig. 8     veranschaulicht eine weitere vorteilhafte Art der Antriebsverbindung zwischen einem erfindungsgemäßen Betätigungsmodul und einer zugeordneten Aktuatoranordnung vermittels Zahnradgetrieben.

Fig. 9     zeigt in den Teilfiguren a) und b) vorteilhafte Ausgestaltungen von zwischen einer jeweiligen Betätigungshülse und der Stützhülse einer Ausführungsform des Betätigungsmoduls wirksamen Gewinden zur Umsetzung einer Drehbewegung der jeweiligen Betätigungshülse in eine axiale Bewegung der betreffenden Betätigungshülse.

Fig. 10     zeigt schematisch eine bevorzugte Ausführungsform des erfindungsgemäßen Betätigungsmoduls mit Kugelgewindegetrieben, die zwischen der Stützhülse und den Betätigungshülsen wirksam sind.

Fig. 11     zeigt in einer Schnittansicht ein vorteilhaftes Ausführungsbeispiel eines erfindungsgemäßen Betätigungsmoduls, das aus Blechhülsen zusammengesetzt ist, von denen zwei Betätigungshülsen mit zwei diese radial einschachtelnden Stützhülsen über eine Kulisse-Kulissenfolger-Anordnung gekoppelt sind, um Drehbewegungen der Betätigungshülsen in axiale Bewegungen derselben umzusetzen.

Fig. 12    zeigt eine vorteilhafte Ausgestaltungsmöglichkeit für die Betätigungshülsen mit Kulissen, die in Umfangsrichtung nichtlinear axial ansteigende Führungskurven definieren.

Fig. 13    zeigt Diagramme, die eine Linealisierung des Zusammenhangs zwischen dem übertragbaren Kupplungsmoment und dem Betätigungsweg eines Aktuators vermittels einer nichtlinearen Beziehung zwischen dem Aktuatorweg und einem Einrückweg veranschaulicht.

Fig. 14    zeigt eine Explosionsansicht eines Betätigungsmoduls von der prinzipiellen Bauart gemäß Fig. 11 und 12.

Fig. 15    zeigt eine Explosionsansicht eines weiteren erfindungsgemäßen Betätigungsmoduls.

Fig. 16    zeigt das Betätigungsmodul der Fig. 15 im zusammengebauten und in eine getriebeseitige Halterungsaufnahme aufgenommenen Zustand, wobei Fig. 16a eine Axialschnittansicht und Fig. 16b eine Querschnittsansicht nach Schnittlinie B-B in Figur 16a ist.

Fig. 17    zeigt einen als Flanschteil ausgeführten Einsteckabschnitt des Betätigungsmoduls der Figuren 15 bis 16, eingesteckt in ein schalenähnliches oder korbähnliches Halterungsteil, das im am Getriebegehäuse montierten Zustand als Halterungsaufnahme dient.

Fig. 18    zeigt das am Getriebegehäuse montierbare Halterungsteil in einer Draufsicht (Fig. 18a), in einer Schnittansicht nach Schittlinie B-B in Fig. 18a (Fig. 18b) und in einer Detailvergrößerung der Schnittansicht im Bereich C (Fig. 18c), jeweils mit in das Halterungsteil aufgenommener Elastomereinlage.

Fig. 19    zeigt das Halterungsteil in einer Draufsicht (Fig. 19a) und in einer Schnittansicht nach Schnittlinie B-B in Fig. 19a (Fig. 19b), jeweils ohne die Elastomereinlage. Das Halterungsteil der Fig. 19 kann auch für eine Verwendung ohne Elastomereinlage vorgesehen sein.

Fig. 20    zeigt das Halterungsteil der Fig. 18 samt Elastomereinlage im montierten Zustand am Getriebegehäuse, und zwar in Fig. 20a als Querschnittsansicht und in Fig. 20b als axiale Draufsicht.

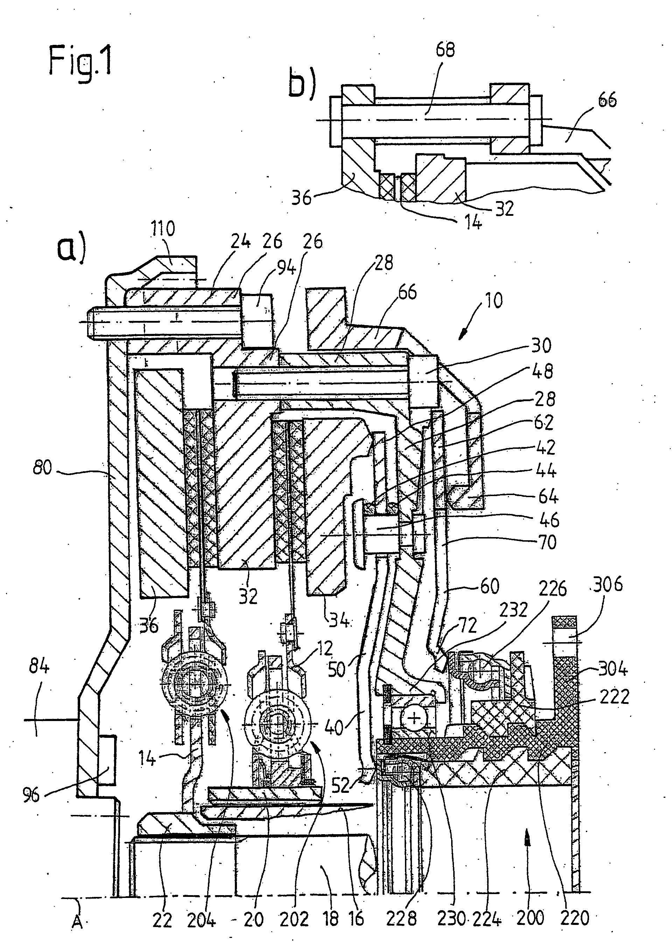

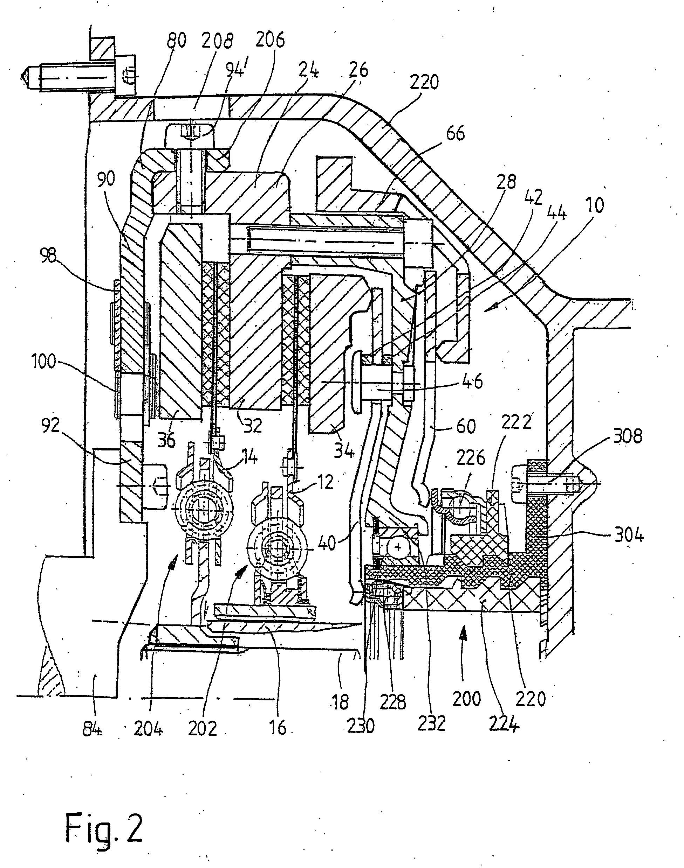

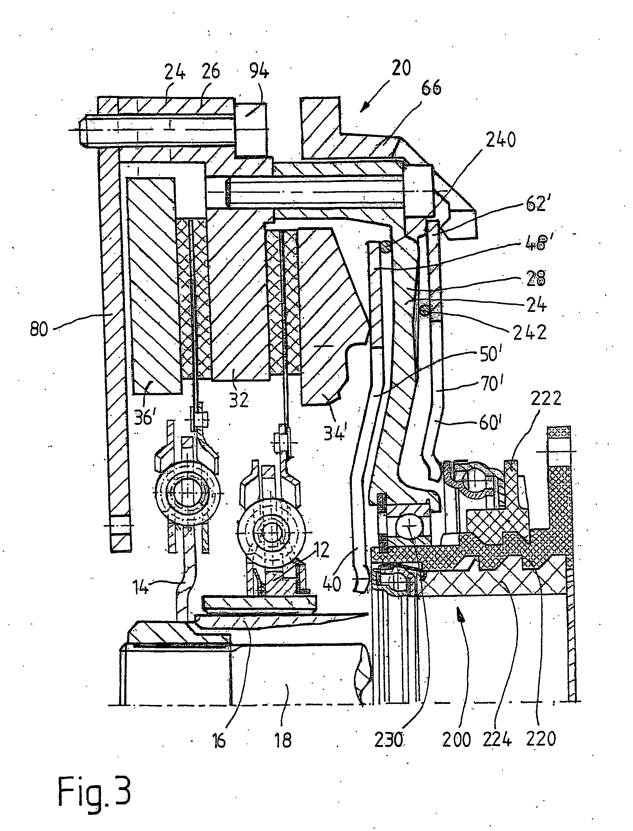

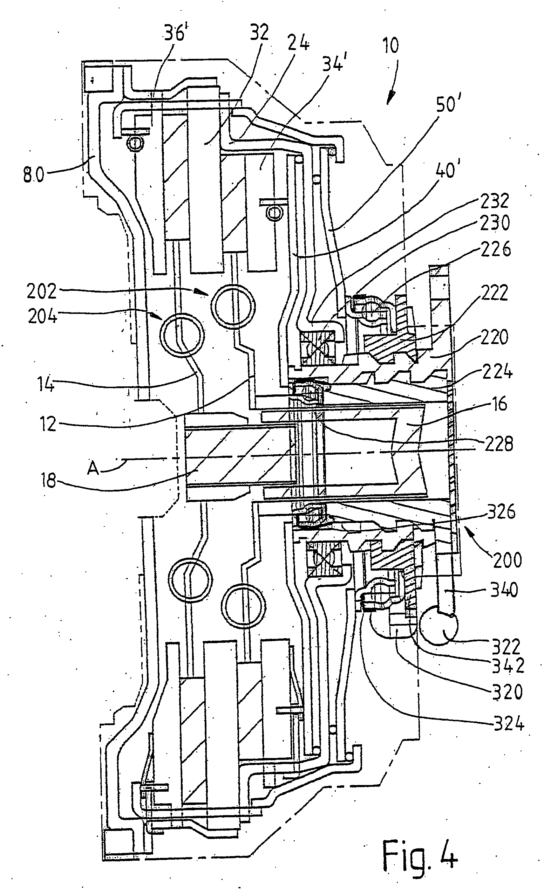

Im Folgenden werden verschiedene Aspekte der Erfindung anhand von speziellen Ausführungsbeispielen, nämlich so genannten Doppelkupplungen der Reibscheibenbauart, näher erläutert, wobei es sich bei den Ausführungsbeispielen der Fig. 1 und 2 um Doppelkupplungen des NORMALERWEISE-GESCHLOSSEN-Typs handelt, die gedrückt betätigt werden, und es sich bei den Ausführungsbeispielen der Fig. 3 und 4 um Doppelkupplungen des NORMALERWEISE-GESCHLOSSEN-Typs handelt, die ebenfalls gedrückt betätigt werden. Die Erfindungsaspekte sind aber unabhängig von dem Kupplungstyp und der Betätigungsart. Die verschiedenen Erfindungsaspekte können sowohl bei Einfachkupplungen (mit nur einer Kupplungsanordnung) als auch Doppelkupplungen (bzw. allgemein Mehrfach-Kupplungseinrichtungen; mit zwei oder mehreren Kupplungsanordnungen) ausgeführt werden, und zwar sowohl bei Kupplungen des NORMALERWEISE-OFFEN-Typs als auch bei Kupplungen des NORMALERWEISE-GESCHLOSSEN-Typs, und unabhängig von der Betätigungsart, nämlich sowohl bei Kupplungen der gedrückten Betätigungsart als auch bei Kupplungen der gezogenen Betätigungsart. Zumindest einige der Aspekte der Erfindung können auch im Zusammenhang mit nasslaufenden Einfach- und Doppelkupplungen der Lamellenkupplungs-Bauart von Interesse sein.

Fig. 1 zeigt eine Doppelkupplung 10 der Reibscheibenbauart, die eine erste Kupplungsscheibe 12 einer ersten Kupplungsanordnung und eine zweite Kupplungsscheibe 14 einer zweiten Kupplungsanordnung aufweist. Die erste Kupplungsscheibe 12 steht mit einer als Hohlwelle ausgeführten ersten Getriebeeingangswelle 16 und die zweite Kupplungsscheibe 14 steht mit einer sich koaxial durch die erste Getriebeeingangswelle 16 erstreckenden zweiten Getriebeeingangswelle 18 auf an sich bekannte Art und Weise in Momentenübertragungsverbindung. Die mit integrierten Torsionsschwingungsdämpfern 202 und 204 ausgeführten Kupplungsscheiben weisen beispielsweise eine Koppelnabe 20 bzw. 22 auf, die auf die betreffende Getriebeeingangswelle aufgeschoben ist und mit dieser über Mitnahmeformationen drehfest gekoppelt ist.

Die Doppelkupplung 10 weist eine Gehäuseanordnung 24 auf, die ein erstes Gehäuseteil 26 und ein zweites Gehäuseteil 28 umfasst, die durch Schraubbolzen 30 miteinander verbunden sind.

Ein beidseitig Reibbeläge tragender ringförmiger Abschnitt der ersten Kupplungsscheibe 12 ist axial zwischen einer ein Widerlager für die Kupplungsscheibe bildenden Druckplattenabschnitt 32 des Gehäuseteils 26 und einer in der Gehäuseanordnung axial beweglich gehaltenen ersten Anpressplatte 34 angeordnet. Die zweite Kupplungsscheibe 14 ist mit ihrem beidseitig Reibbeläge tragenden Ringbereich axial zwischen dem ein Widerlager für die Kupplungsscheibe bildenden Druckplattenabschnitt 32 und einer in der Gehäuseanordnung axial beweglich gehaltenen zweiten Anpressplatte 36 gehalten. Die beiden Anpressplatten sind jeweils auf an sich bekannte Art und Weise durch Tangentialfedern (Tangentialblattfedern) oder dergleichen in der Gehäuseanordnung gehalten und jeweils in Öffnungs- oder Ausrückrichtung federvorgespannt.

Auf die erste Anpressplatte 34 wirkt eine erste Teller- oder Membranfeder 40, die unter Vermittlung von Stützringen 42, 44 und Zentrierbolzen 46 an einem nach radial innen vorspringenden Ringabschnitt des zweiten Gehäuseteils 28 abgestützt ist. Fig. 1 zeigt die erste Membranfeder in einem unbetätigten Zustand. In diesem Zustand wirkt die Membranfeder 40 mit ihrem Ringabschnitt 48 in Schließ- oder Einrückrichtung auf die erste Anpressplatte 34, so dass diese gegen die erste Kupplungsscheibe 12 mit maximaler Anpresskraft angepresst ist, die Kupplungsscheibe also maximal zwischen dem Widerlager der Druckplatte 32 und der Anpressplatte 34 eingespannt ist. Die erste Kupplungsanordnung ist also vollständig eingerückt. Zum Ausrücken der ersten Kupplungsanordnung sind die Betätigungszungen oder Betätigungshebel 50 der Membranfeder 40 durch Anlegen entsprechender axialer Kräfte an deren Endabschnitten 52 in Richtung zur Antriebseinheit, also in Fig. 1 nach links, auszulenken. Die Membranfeder schwenkt dann zwischen den ein Schwenklager bildenden Stützringen 42 und 44, so dass die auf die Anpressplatte 34 wirkenden Axialkräfte reduziert werden und die Anpressplatte 34 unter der Wirkung ihrer Federvorspannung sich axial nach rechts bewegen kann bzw. die auf die Kupplungsscheibe 34 wirkenden Einspannkräfte reduziert werden.

Der zweiten Anpressplatte 36 ist eine zweite Membranfeder oder Tellerfeder 60 zugeordnet, deren Ringabschnitt 62 zwischen Abstützabschnitten des ersten Gehäuseteils 28 und einem ringförmigen, einen definierten Abstützradius bildenden Abstützabschnitt 64 eines als Ringteil ausgeführten Kraftübertragerglieds 66 eingespannt ist, welches über als Zuganker dienende Verbindungsbolzen 68 mit der zweiten Anpressplatte 36 verbunden ist. Im in Fig. 1 gezeigten Zustand drückt die zweite Membranfeder 60 das Kraftübertragerglied 64 in Richtung zum Getriebe, also in Fig. 1 nach rechts, wodurch die zweite Anpressplatte 36 gegen die zweite Kupplungsscheibe 14 gedrückt wird und die Kupplungsscheibe dementsprechend zwischen der zweiten Antriebsplatte 36 und der Druckplatte 32 axial eingespannt ist. Fig. 1 zeigt in Bezug auf die zweite Kupplungsanordnung ebenfalls den Zustand maximaler Einrückung. Zum Ausrücken der zweiten Kupplungsanordnung werden die Betätigungszungen oder Betätigungshebel 70 durch Anlegen entsprechender Axialkräfte an deren Endabschnitten 72 in Richtung zur Antriebseinheit, in Fig. 1 also nach links, ausgelenkt.

Die Doppelkupplung 10 ist beim Ausführungsbeispiel der Fig. 1 über eine Flexplatte 80 an der Abtriebswelle 84 einer Antriebseinheit, insbesondere einer Brennkraftmaschine, angebunden. In Abweichung von Fig. 1 könnte die Doppelkupplung auch über ein Zwei-Massen-Schwungrad oder ein einfaches Schwungrad an der Antriebswelle angekoppelt sein. Auf ein Zwei-Massen-Schwungrad oder ein einfaches Schwungrad kann unter Umständen (entsprechend dem in Fig. 1 gezeigten Ausführungsbeispiel) verzichtet werden, insbesondere deswegen, weil die Druckplatte 32 und die Anpressplatten 34 und 36 selbst eine vergleichsweise große Drehmasse bilden, die insoweit als Schwungmasse dienen könnte. Insbesondere kann diese Drehmasse der Doppelkupplung eine einfache (starre) Schwungmasse oder - wenn ein Zwei-Massen-Schwungrad gewünscht ist - die sekundäre Drehmasse des Zwei-Massen-Schwungrads bilden.

Die Kupplungsanordnungen sind über ein zur Doppelkupplung zugehöriges Betätigungsmodul 200 betätigbar. Das Betätigungsmodul weist eine am Getriebegehäuse insbesondere gegen ein Verdrehen gesicherte Zentralhülse 220 auf, die eine Außenhülse 222 und eine Innenhülse 224 trägt. Die Außenhülse 222 und die Innenhülse 224 stehen jeweils über ein Außengewinde bzw. Innengewinde mit der Zentralhülse 220 in Eingriff, derart, dass eine Verdrehung der Außenhülse oder/und der Innenhülse relativ zur Zentralhülse eine axiale Verlagerung der betreffenden Hülse (Außenhülse bzw. Innenhülse) induziert. Die Außenhülse 222 ist mit einem Ausrücklager 226 versehen, und die Innenhülse 224 ist mit einem Ausrücklager 228 versehen, über die unter Vermittlung der Außenhülse bzw. Innenhülse axiale Kräfte auf die Membranfederzungen der Membranfeder 40 bzw. 60 ausgeübt werden können, um die Betätigungszungen der jeweiligen Membranfeder in Richtung zur Antriebseinheit auszulenken und damit die erste oder/und zweite Kupplungsanordnung in Ausrückrichtung zu betätigen. Um der Außenhülse und der Innenhülse eine entsprechende Drehbewegung in Ausrückrichtung bzw. Einrückrichtung zu erteilen, können die Hülsen beispielsweise mit radial vorstehenden Hebelarmen ausgeführt sein, auf die ein jeweils zugeordnetes Stellglied wirkt.

Um einen geschlossenen Axialkraftfluss innerhalb des die eigentliche Doppelkupplung 10 und das Betätigungsmodul 200 umfassenden Baueinheit vorzusehen, steht die Zentralhülse 220 mit dem zweiten Gehäuseteil 28, das über die Stützringe 42 und 44 und die Positionier- oder Haltebolzen 46 die erste Membranfeder 40 hält, in axialer Abstützbeziehung. Hierzu erstreckt sich das zweite Gehäuseteil 28 radial weiter nach innen bis zu einem Radial- und Axiallager 230, das radial zwischen der Zentralhülse 220 und einem Innenumfang eines Ringabschnitts 232 des Gehäuseteils 28 gehalten ist und axial durch Ringbünde bzw. Sicherungsringe oder dergleichen am Ringabschnitt 232 und der Zentralhülse 220 gesichert ist.

Ein wichtiger Aspekt des Ausführungsbeispiels ist, dass aufgrund des geschlossenen Axialkraftflusses innerhalb des die eigentliche Doppelkupplung 10 und das Betätigungsmodul 200 umfassenden Gesamtmoduls im Zusammenhang mit der Kupplungsbetätigung keine Axialkräfte auf die Abtriebswelle, insbesondere Kurbelwelle 84, der Antriebseinheit wirken, die deren Lager übermäßig belasten könnten. Die axiale Abstützung wird vorteilhaft durch ein zwischen der eigentlichen Kupplungseinrichtung einerseits und der zugehörigen Betätigungseinheit andererseits wirksames zentrales Stützlager, im Beispielsfall das Lager 230, vermittelt.

Das Betätigungsmodul 200 kann vor der Eingliederung der Doppelkupplung in Antriebsstrang mit der eigentlichen Doppelkupplung 10 zu einer Baueinheit verbunden werden und kann dann als eine Baueinheit getriebeseitig in der Getriebeglocke, also getriebeseitig, vormontiert werden. Motorseitig sitzt die Flexplatte 80 (oder allgemein eine Flexplattenanordnung) vormontiert am Koppelende der Abtriebswelle 84, insbesondere Kurbelwelle 84, oder alternativ an einem Schwungrad. Bei der Montage des Getriebes am Motor fahren dann das Kupplungsmodul und die Flexplattenanordnung 80 aufeinander und können dann über die wenigstens eine Öffnung 208 in der Getriebeglocke miteinander verbunden werden.

Die Flexplatte 80 kann vorteilhaft mit einem integrierten Starterzahnkranz (bei 110) ausgeführt sein, der beispielsweise in einen radial äußeren, sich axial erstreckenden Ringbund der Flexplatte eingerollt sein könnte. Man kann auch noch weitere Bereiche (Blechbereiche) aus der Flexplatte bzw. dem Ringteil herausformen, z. B. um OT-Markierungen (OT = oberer Totpunkt) für die Motorsteuerung bereitzustellen. Ein Vorteil der hier vorgeschlagenen Lösung ist die einteilige und damit kostengünstige Darstellung des Anlasserzahnkranzes bzw. der weiteren Bereiche. Insbesondere werden Probleme vermieden, die dann auftreten könnten, wenn ein gesonderter Zahnkranz an einer Flexplatte bzw. Flexplattenanordnung angebracht werden muss.

Fig. 2 zeigt ein weiteres Ausführungsbeispiel einer erfindungsgemäßen Doppelkupplung der Reibscheibenbauart samt zugehörigem Betätigungsmodul 200. Anstelle einer einfachen Flexplatte ist eine mehrteilige Flexplattenanordnung 80 mit einem radial äußeren Ringteil 90 und einem radial inneren Zentral- oder Nabenteil 92 und diese verbindenden, federelastischen Verbindungsteilen 98, 100 vorgesehen, das vorliegend wiederum direkt an der Abtriebswelle 84 angebracht ist. Auf ein Zwei-Massen-Schwungrad ist beim vorliegenden Ausführungsbeispiel also ebenfalls verzichtet. Die Kupplungsscheiben 12 und 14 sind deshalb nicht in Drehrichtung im Wesentlichen starr, sondern als Kupplungsscheiben mit integrierten Torsionsschwingungsdämpfern 202 und 204 ausgeführt. Hinsichtlich der Verbindung des radial äußeren Ringteils 90 mit dem Kupplungsgehäuse 24 ist gemäß Fig. 2 eine radiale Verschraubung durch Verbindungsschrauben 94' vorgesehen, die zwischen einem sich axial erstreckenden Bundabschnitt 206 des Ringteils 90 und dem ersten Gehäuseteil 26 wirken. Die radiale Verschraubung gemäß Fig.

2 ermöglicht eine besonders einfache Montage durch wenigstens eine zugeordnete Öffnung 208 in der Getriebegehäuseglocke 210. Vorzugsweise sind am Umfang verteilt mehrere derartige Öffnungen 208 vorzusehen, um bei der Montage ein Weiterdrehen des Motors zu begrenzen oder zu vermeiden.

Fig. 3 zeigt eine Ausführungsvariante, bei der ebenfalls eine einfache (herkömmliche) Flexplatte 80 zur Anbindung der Doppelkupplung 10 an die Antriebswelle der Antriebseinheit vorgesehen ist. Die Doppelkupplung 10 ist wie beim Ausführungsbeispiel der Fig. 1 und 2 mit einem Betätigungsmodul 200 zu einer Einbau-Baueinheit integriert, und es ist eine axiale Abstützbeziehung zwischen der Zentralhülse 220 des Betätigungsmoduls und dem Gehäuseteil 28 unter Vermittlung des axial und radial wirksamen Drehlagers 230 realisiert, um einen geschlossenen Axialkraftfluss vorzusehen. Damit werden wie bei den Ausführungsbeispielen der Fig. 1 und 2 bei der Auslenkung der Membranfedern am Gehäuse abgestützte axiale Gegenkräfte an der Zentralhülse 220 abgestützt, so dass sich diese axialen Gegenkräfte und zwischen der Zentralhülse 220 und der Außenhülse 222 bzw. Innenhülse 224 wirkende axiale Gegenkräfte im Wesentlichen gegenseitig aufheben.

Im Gegensatz zu den bisher beschriebenen Ausführungsbeispielen handelt es sich bei der Doppelkupplung 10 der Fig. 3 um eine Kupplung vom NORMALERWEISE-OFFEN-Typ. Fig. 3 zeigt die erste und die zweite Kupplungsanordnung jeweils im ausgerückten Zustand. Für die beiden Membranfedern 40' und 60' ist eine Schwenkabstützung am Gehäuseteil 28 vermittels eines jeweiligen Abstützrings 240 bzw. 242 vorgesehen. Die Membranfedern 40' und 60' wirken in erster Linie als Betätigungshebel, die zum Einrücken unter Vermittlung der Außenhülse 220 bzw. Innenhülse 224 in Richtung zur Antriebseinheit ausgelenkt werden und dabei um den Stützring 240 bzw. 242 schwenken. Bei dieser Schwenkbewegung bewegt sich im Falle der Membranfeder 40' der untere Bereich des Ringabschnitts 48' der Membranfeder 40' axial in Richtung zur Antriebseinheit (in Fig. 3 nach links) und nimmt damit die Anpressplatte 34' axial mit, so dass diese gegen den Reibbeläge tragenden Ringabschnitt der Kupplungsscheibe 12 gedrückt wird und die Kupplungsscheibe zwischen dem Druckplattenabschnitt 32 und der Anpressplatte 34' axial eingespannt wird. Bei einer Auslenkung der Membranfeder 60' auf die angegebene Weise schwenkt diese um den Abstützring 242, so dass sich der Ringabschnitt 62' in seinem radial äußeren Bereich axial in Richtung zum Getriebe (in Fig. 3 nach rechts) bewegt und über das Kraftübertragungsglied 66 und die im Zusammenhang mit Fig. 1 erläuterten Zuganker die Anpressplatte 36' axial mitnimmt und gegen den Reibbeläge tragenden Ringabschnitt der zweiten Kupplungsscheibe 14 drückt, so dass diese zwischen der Anpressplatte 36' und dem Druckplattenabschnitt 32 axial eingespannt wird. Auf die Ausübung von Federkräften durch die Membranfedern 40' und 60' zum Einrücken kommt es bei einer derartigen Kupplung nach dem NORMALER-WEISE-OFFEN-Prinzip nicht unbedingt an, es ist vielmehr vorteilhaft, wenn die Membranfedern vergleichsweise weich ausgeführt sind, so dass die Zungen oder Hebel 50' und 70' der beiden Membranfedern jeweils als einzelne Hebel arbeiten.

Fig. 4 zeigt eine strukturell dem Ausführungsbeispiel der Fig. 3 entsprechende Doppelkupplung 10 in einer schematisierten Schnittansicht. Die Doppelkupplung weist das Betätigungsmodul 200 auf, das über das Stützlager 230 mit dem Gehäuse 24 der Doppelkupplung 10 in Abstützbeziehung steht, um einen geschlossenen Axialkraftfluss vorzusehen. Es sind die auch als Lagerträger oder Betätigungshülsen bezeichenbaren Betätigungsglieder 222 und 224 vorgesehen, die mit dem auch als Gewindehülse oder Stützhülse bezeichenbaren Stützglied 220 zwei unabhängig voneinander betätigbare Bewegungsschrauben bilden und jeweils unabhängig voneinander relativ zur Gewindehülse 220 verdrehbar sind. Gezeigt ist das Betätigungsmodul in Verbindung mit einer Doppelkupplung, vorzugsweise für ein lastschaltbares Getriebe. Wie schon erwähnt, kann die Kupplung bzw. können die Kupplungen ganz nach Wunsch als Kupplungen vom NORMALERWEISE-OFFEN-Typ oder NORMALER-WEISE-GESCHLOSSEN-Typ ausgeführt sein. Für das Betätigungsmodul ist es unerheblich, ob die Betätigungskräfte zum Öffnen oder zum Schließen der jeweils zugeordneten Kupplungsanordnung aufgewendet werden. Es kann deshalb auch eine Kupplungsanordnung vom NORMALERWEISE-OFFEN-Typ und die andere Kupplungsanordnung vom NORMALERWEISE-GESCHLOSSEN-Typ sein, das Betätigungsmodul 200 kann also mit zwei Einrückeinheiten oder zwei Ausrückeinheiten oder mit einer Kombination aus einer Einrückeinheit und einer Ausrückeinheit ausgeführt sein.

Es sollte darauf hingewiesen werden, dass der geschlossene Axialkräftekreislauf in dem in Fig. 4 gezeigten Einbaumodul über das Stützlager 230 nicht zwingend ist. Um eine axiale Abstützung der Betätigungskraft an der Kurbelwelle zu vermeiden, ist diese Ausbildung der in Fig. 4 gezeigten Kombination aber sehr vorteilhaft.

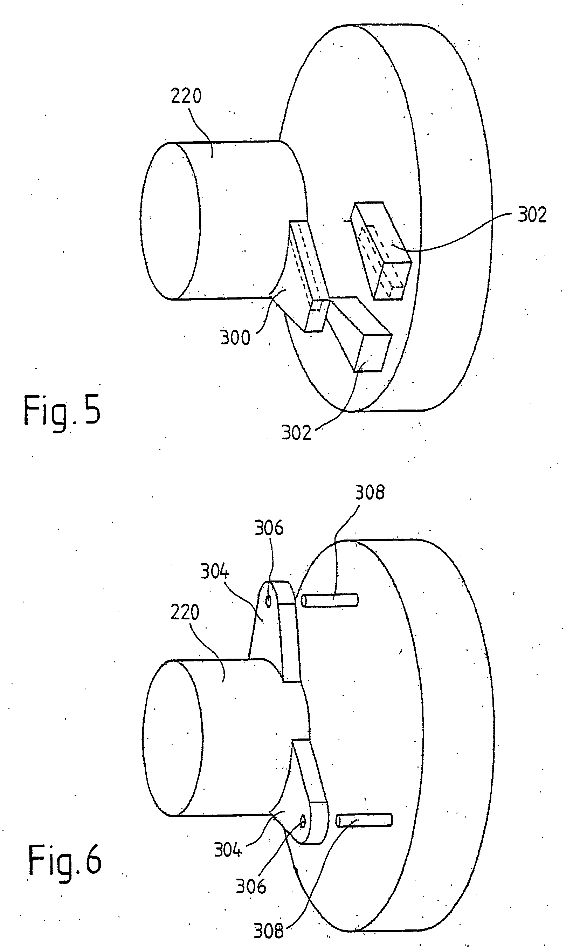

Wie erläutert, besteht das Betätigungsmodul 200 im Wesentlichen aus drei elementaren Bauteilen, nämlich der Gewindehülse 220 als tragendem Element und dem inneren und dem äußeren, jeweils als Hülse ausgebildeten Lagerträger 222 bzw. 224. Die Gewinde- oder Stützhülse 220 wird vorzugsweise an der motorseitigen Getriebewand radial und gegen Verdrehung abgestützt. Fig. 5 zeigt eine Möglichkeit zur radialen Fixierung, nämlich über wenigstens einen Radialvorsprung (ggf. Rippe oder Lappen) 300 am Umfang der Stützhülse 220, der sich wiederum an wenigstens einer Rippe 302 oder dergleichen abstützt und so eine Verdrehung der Stützhülse 220 verhindert. In der Regel wird es vorteilhaft sein, die Stützhülse 220 gegen Verdrehen in beiden Drehrichtungen abzustützen. Gemäß Fig. 5 sind deshalb zwei Rippen 302 am Getriebegehäuse vorgesehen, zwischen die der Vorsprung 300 im Wesentlichen drehspielfrei eingreift.

In Fig. 5 ist noch die Möglichkeit gestrichelt angedeutet, dass man die an der Stützhülse 220 einerseits und an der Abstützbasis, ggf. dem Getriebegehäuse, vorgesehenen Sicherungsformationen in der Art eines Bajonettverschlusses ausführt, um auch eine axiale Sicherung der Stützhülse 220 an der Abstützbasis vorzusehen. Dieser Bajonettverschluss kann auch so ausgeführt sein, dass er durch eine Art Rasteingriff eine gewisse Verdrehungssicherung in einer Drehrichtung vorsieht. Die Drehsicherung in der anderen Drehrichtung erfolgt dabei vorzugsweise formschlüssig durch den Vorsprung 300 und die mit den Verrastmitteln ausgeführte Rippe 302. Die andere, in Fig. 5 ohne gestrichelte Bajonettmitttel dargestellte Rippe 302 kann dann entfallen.

Eine weitere Möglichkeit zur rein radialen Fixierung und Drehsicherung der Stützhülse 220 ist in Fig. 6 gezeigt. Die Stützhülse mit radial vorstehendem Haltelappen 304 ausgeführt, die Öffnungen 306 für am Getriebegehäuse bzw. der Abstützbasis vorgesehene Haltebolzen 308 aufweisen. Es wird diesbezüglich auch auf die Fig. 1 und 2 verwiesen. Nach Fig. 2 sind die Haltebolzen als auch eine axiale Sicherung gebende Schrauben 308 ausgeführt.

Die Stützhülse 220 ist, wie schon erläutert, mit einem ein- oder mehrgängigen Innengewinde und einem ein- oder mehrgängigen Außengewinde und einem Lagersitz für das Stützlager 230 ausgeführt. Auf das äußere Gewinde ist der äußere, ein Innengewinde aufweisene Lagerträger 222 aufgeschraubt, der das vorzugsweise axial belastbare Lager 226 trägt. Dieses Lager ermöglicht eine rotatorische Relativbewegung zwischen dem Ein- bzw. Ausrückelement 50' der Doppelkupplung 10. Ein am äußeren Lagerträger 222, genauer an einem Hebelabschnitt 342 desselben vorgesehener Kraftangriffspunkt 320, beispielsweise in der Art einer Kugelkalotte, ermöglicht die Einleitung einer im Wesentlichen tangential gerichteten Kraft auf den Umfang des Lagerträgers 222. Unter Wirkung dieser tangentialen Kraft kann der Lagerträger 222 eine der Steigung seines Innengewindes bzw. des Außengewindes der Stützhülse 220 entsprechende Schraubbewegung ausführen und über das Element 50' die zugeordnete Kupplungsanordnung betätigen. Der Radialabstand des Kraftangriffspunkts von der Drehachse A bestimmt dabei die Kraft-/ Wegübersetzung des Betätigungsmoduls betreffend die Betätigungshülse (den Lagerträger) 222.

Analog zur äußeren Betätigungshülse ist auch die innere Betätigungshülse (der innere Lagerträger) 224 aufgebaut. Das Innengewinde der Stützhülse 220 ist mit dem Außengewinde der inneren Betätigungshülse verschraubt. Diese Gewinde können die gleiche Steigung wie die für die äußere Betätigungshülse 222 maßgeblichen Gewinde aufweisen. In diesem Fall ist es bevorzugt, dass die Gewindegänge des äußeren Gewindes und die Gewindegänge des inneren Gewindes der Stützhülse 220 derart in Bezug aufeinander angeordnet sind, dass die "Gewindetäler" des Außengewindes axial mit den "Gewindebergen" des Innengewindes zusammenfallen, wie dies auch im Falle der Fig. 4 der Fall ist. Auf diese Weise kann die Stützhülse mit einer vergleichsweise geringen Wandstärke ausgeführt werden.

Auch die innere Betätigungshülse 224 ist mit einem Kraftangriffspunkt 322 an einem Hebelabschnitt 340 beispielsweise in der Art einer Kugelkalotte ausgeführt, über den eine im Wesentlichen tangentiale Kraft eingeleitet werden kann, die zu einer Schraubbewegung der inneren Betätigungshülse 224 führt. Das ebenfalls vorzugsweise axialkraftübertragende Lager 228 leitet die axiale Verschiebung der Betätigungshülse 224 an das Ein- bzw. Ausrückelement 40' der zugeordneten Kupplungsanordnung weiter.

Betreffend die Kraftangriffspunkte 320 und 322 ist darauf hinzuweisen, dass neben einer Verkopplung der jeweiligen Betätigungshülse mit einem zugeordneten translatorischen Aktuator über eine jeweilige Kugelkopf-Kugelkalotten-Kombination auch andere, vorzugsweise mehrere Freiheitsgrade (Dreh-Kipp-Bewegung) ergebende Verkopplungen vorgesehen sein können. Anstelle einer Kugelkopf-Kugelkalotten-Kombination kommt insbesondere auch ein so genanntes Kreuzgelenk in Betracht.

Die auch als Stellglieder bezeichenbaren Aktuatoren können beispielsweise von hydraulischen Nehmerzylindern gebildet sein, wobei beispielsweise die Kolbenstange des Nehmerzylinders am vom Zylinder fernen Ende mit einem Kugelkopf ausgeführt sein kann, der in eine zugeordnete Kugelkalotte eingreift. Umgekehrt könnte auch der Kugelkopf als Kraftangriffspunkt dienen und die Kolbenstange mit einer Kugelkalotte versehen sein. Um die sich bei der Verdrehung der Betätigungshülsen ändernden Radialabstände der Kugelangriffspunkte in einer zu den Kolbenstangen orthogonalen Projektionsebene auszugleichen, sollten die hydraulischen Nehmerzylinder (bzw. allgemein die Aktuatoren) schwenkbar im bzw. am Antriebsstrang gehalten sein.

Zu den Ausrück- bzw. Einrücklagern 226 und 228 ist noch darauf hinzuweisen, dass diese Lager vorzugsweise derart an der jeweiligen Betätigungshülse gehalten sind, dass eine kleine Reiativbewegung in radialer Richtung zur jeweiligen Hülse möglich ist. Hierdurch wird eine automatische Zentrierung der Lager ermöglicht. Die in Fig. 4 gezeigten Federbleche 324 und 326 stellen in diesem Zusammenhang nur eine von mehreren geeigneten Lösungen dar.

Betreffend die Ausgestaltung der Innen- und Außengewinde ist noch Folgendes auszuführen. Bevorzugt ist eine derartige Ausgestaltung, dass nur eine einseitige Axialkraft-Abstützung vorliegt. Der einseitige Eingriff hat den Vorteil, dass die Gefahr einer Selbsthemmung stark verringert oder sogar vermieden ist. Bevorzugt ist speziell die in den bisher beschriebenen Figuren dargestellte Sägezahn-Ausgestaltung. Die im Querschnitt steilen Flanken stehen im Eingriff.

Besonders vorteilhaft ist, wenn die im Eingriff stehenden Gewindeflanken radial verlaufen, so dass bei der Betätigung keine radialen Kräfte induziert werden.

Die Hülsen können aus diversen Materialien gefertigt sein. Besonders vorteilhaft, da kostengünstig, sind Hülsen (Betätigungshülsen und die Stützhülse) aus Kunststoff, wobei vorzugsweise selbstschmierende oder gleitmodifizierte Kunststoffe für die Stützhülse oder/und die Betätigungshülsen verwendet werden. Eine vorteilhafte Möglichkeit ist auch, die Betätigungshülsen aus Kunststoff und die feststehende Stützhülse aus Aluminium oder einem gegenüber den Betätigungshülsen festeren Kunststoff zu fertigen. Die umgekehrte Materialzuordnung ist ebenfalls möglich. Geeignete Materialpaarungen für eine Stützhülse-Betätigungshülse-Kombination sind insbesondere:

Duroplast - Aluminium
Duroplast - Thermoplast.

Betreffend die vorteilhaft verwendbaren gleitmodifizierten Kunststoffe kommen als gleitmodifizierende Stoffe insbesondere PTFE, Molybdänphosphit und $MOS_2$ in Betracht. Geeignet sind insbesondere die gleitmodifizierten Kunststoffe Polysulfon und Polyphthalamid, die jeweils einen PTFE (Poly-Tetra-Fluor-Ethylen)-Anteil von 15 % aufweisen.

Um für eine besonders niedrige Reibung zu sorgen, kommt grundsätzlich auch eine Nassschmierung der Innen- und Außengewinde-Paarungen in Betracht. Eine solche ist bei trockenlaufenden Doppelkupplungen allerdings nur mit recht großem technischen Aufwand zu realisieren. Anders stellt sich die Sachlage bei nasslaufenden Kupplungen oder Doppelkupplungen, insbesondere Lamellen-Kupplungen, dar. Hier bietet es sich an, das Betätigungsmodul im Nassraum anzuordnen und so für eine zwangsweise Schmierung zu sorgen.

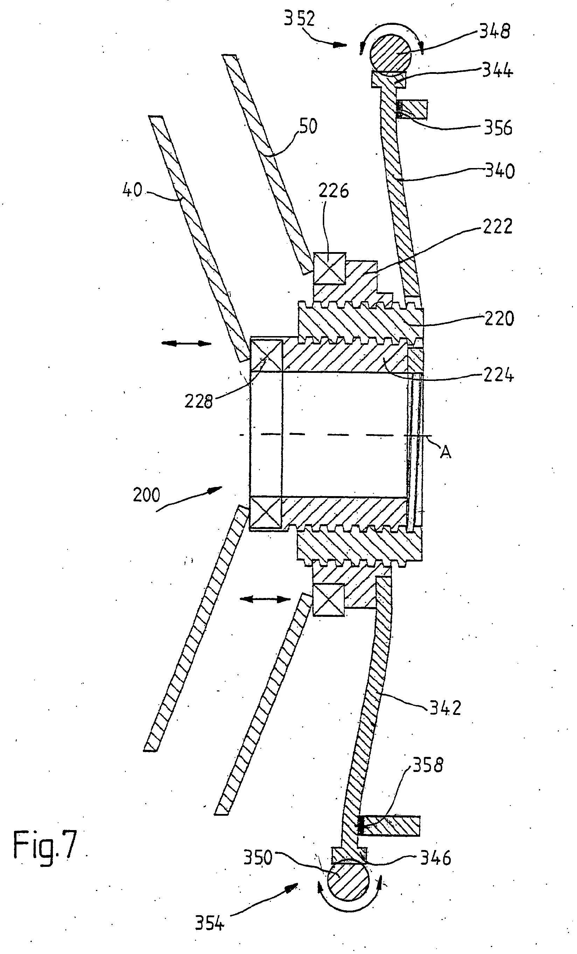

Fig. 7 veranschaulicht eine andere Art der Erzeugung und Einleitung einer Tangentialkraft, um die beschriebene Schraubbewegung der Betätigungshülsen 222 und 224 zu erreichen. Die beiden Betätigungshülsen sind jeweils mit einem Zahnradsektor 340 bzw. 342 ausgeführt, der radial außen einen Zahnkranzsektor 344 bzw. 346 aufweist, der mit einer Schnecke 348 bzw. 350 eines Schneckengetriebes 352 bzw. 354 kämmt. Die Schnecken 348 und 350 werden dabei vorzugsweise elektromotorisch angetrieben und sind im Bedarfsfall in beiden Drehrichtungen mit einem Antriebsmoment beaufschlagbar. Um die Axialbewegung der jeweiligen Betätigungshülse 222 bzw. 224 an der Kämmeingriffsstelle zwischen der Schnecke 348 bzw. 350 und dem jeweiligen Zahnkranzsektor 344 bzw. 346 auszugleichen, können die auch als Betätigungshebel bezeichenbaren Zahnradsektoren 340 und 342 als vorgespannte Blattfedern ausgeführt sein, deren Federkraft an einer jeweiligen Reibstelle 356 bzw. 358 abgestützt ist. Diese Reibstelle verhindert jeweils zugleich eine selbsttätige Rückstellung der Betätigungshülsen unter der Einwirkung der jeweiligen Ausrückfederanordnung bzw. der Gegenkräfte zu der auf die jeweilige Kupplungsanordnung wirkenden Anpresskraft (es wird hier als Beispiel von KuppiungsanordnungendesNORMALERWEISE-OFFEN-Typsausgegangen). Die jeweilige Kupplungsanordnung kann dann ohne energetischen Aufwand geschlossen bleiben, und es wird insbesondere der momentane Betätigungszustand beibehalten, selbst wenn die den Schnecken 348 und 350 zugeordneten Elektromotoren stromlos werden. Die beschriebene "Selbsthemmung" kann auch im jeweiligen Schneckengetriebe selbst dargestellt werden, so dass insoweit auf die Reibstellen 356 und 358 verzichtet werden kann. Man kann vorteilhaft auch aktivierbare und deaktivierbare Reibungsbremsen vorsehen, die beispielsweise mittels eines elektromagnetischen Stellglieds axial verstellbare Reibstellen aufweisen. Die Reibungsbremsen sollten dann bremsen, wenn der dem Schneckengetriebe zugeordnete Motor nicht aktiviert ist bzw. stromlos ist. Hierzu kann das ggf. verwendete elektromagnetische Stellglied derart ausgebildet sein, dass bei einem Ausfall von Strom die Reibungsbremse aktiviert ist.

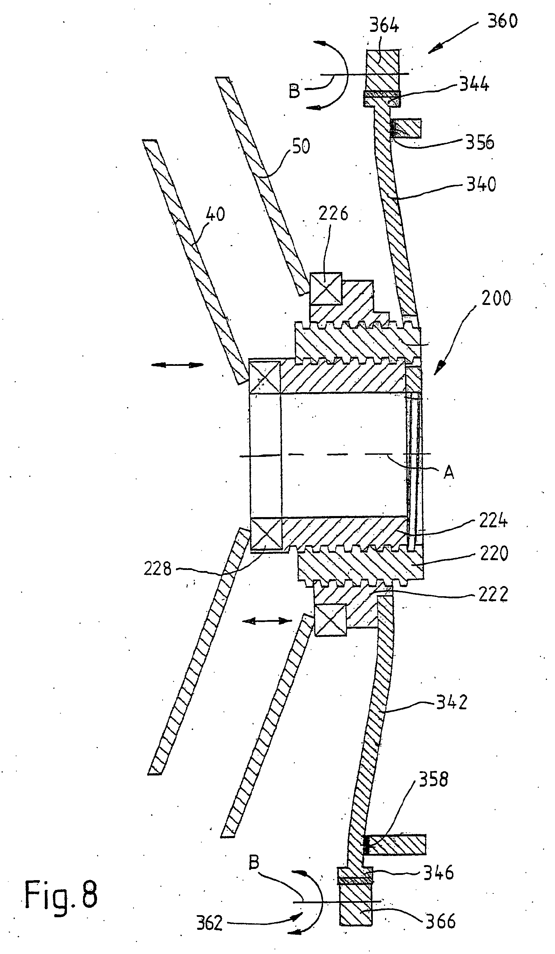

Fig. 8 zeigt eine Ausführungsvariante, bei der die Betätigungshülsen 222 und 224 des Betätigungsmoduls 200 unter Vermittlung eines jeweiligen Zahnradgetriebes 360 bzw. 362 rotatorisch und damit, unter Vermittlung der Gewinde, translatorisch verstellbar sind. Die Zahnradgetriebe weisen jeweils ein Ritzel 364 bzw. 366 auf, das mit einem jeweiligen Zahnkranzsegment 344 bzw. 346 der Zahnradsektoren 340 und 342 kämmt. Die Antriebsritzel 364 und 366 sind vorzugsweise elektromotorisch angetrieben. Die vermittels der Zahnradsektoren 340 und 342 den Hülsen 322 und 324 erteilten Drehbewegungen erzeugen die beschriebene Schraubbewegung der jeweiligen Betätigungshülse relativ zur Stützhülse 220.

Auch beim Ausführungsbeispiel der Fig. 8 können die auch als Betätigungshebel bezeichenbaren Zahnradsektoren 340 und 342 als Blattfedern ausgeführt sein, um die Axialbewegung der Betätigungshülsen 322 und 324 auszugleichen. Die Blattfedern können vorteilhaft, z. B. mittels Nieten, mit den vorzugsweise aus Kunststoff hergestellten Betätigungshülsen, verbunden sein. Wie schon erläutert, kann für eine möglichst kostengünstige Herstellung des Betätigungsmoduls 200 auch die Stützhülse 220 aus Kunststoff oder einem anderen, einfach verarbeitbaren Werkstoff, z. B. Aluminium, hergestellt sein.

Es sollte darauf hingewiesen werden, dass bei den bisher beschriebenen Ausführungsvarianten die Enden der Betätigungshebel einschließlich der die Kraftangriffspunkte 320 und 322 aufweisenden Betätigungshebel auch aus der Getriebeglocke herausgeführt sein könnten und dann zur Einleitung der Schraubbewegung von außen zu betätigen wären. Betreffend die Ritzel-Zahnrad-Kombinationen gemäß Fig. 8 darauf hinzuweisen, dass neben einer Gradverzahnung auch eine Schrägverzahnung in Betracht kommt.

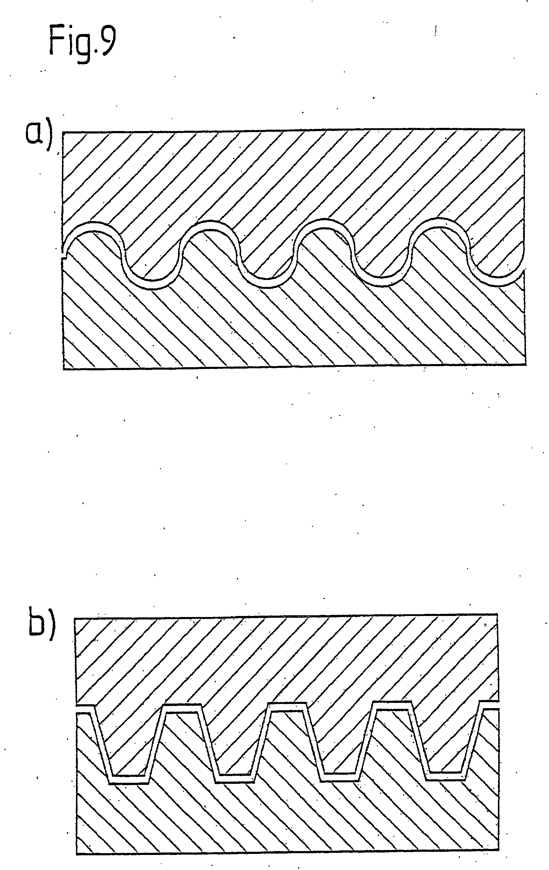

Wie schon erläutert, ist insbesondere die in den Fig. 1 bis 4 realisierte Ausgestaltung der Gewinde als Sägezahngewinde bevorzugt, bei denen besonders einfach axial einseitig wirkende Axialkräfte gewährleistet werden können. Es sind aber auch andere Ausgestaltungen der Gewinde möglich, beispielsweise als Rundgewinde entsprechend Fig. 9a oder als Trapezgewinde entsprechend Fig. 9b.

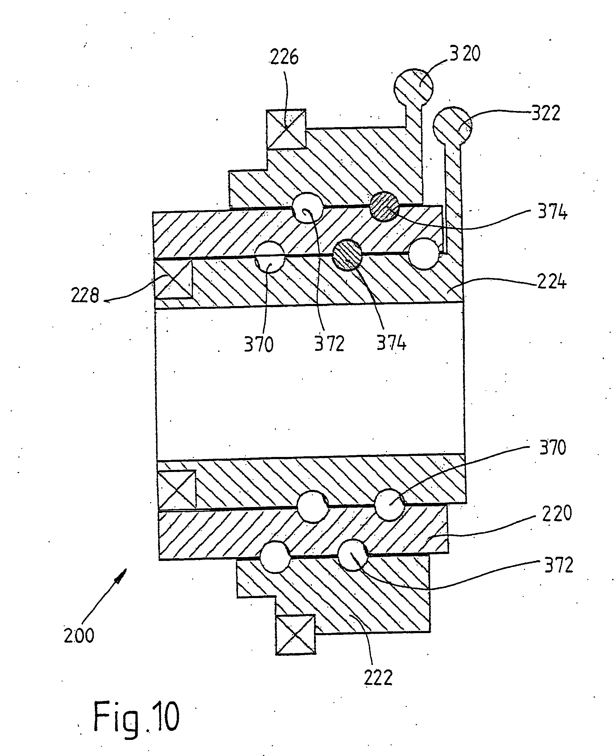

Ein aufgrund rollender statt gleitender Reibung zwischen den Hülsen besonders reibungsarmes Betätigungsmodul 200 ist in einem schematischen Ausführungsbeispiel in Fig. 10 dargestellt. Die Stützhülse 220 und die Betätigungshülsen 222 und 224 sind mit Laufbahnen 370 und 372 für Rollkugeln 374 ausgeführt. Sieht man eine ununterbrochene Kette von Rollkugeln vor, so kann jeweils eine Hülse der Hülsenpaare Stützhülse-Außenbetätigungshülse und Stützhülse-Innenbetätigungshülse mit einem Kugelrücklauf ausgeführt sein, wie dies an sich bekannt ist.

Aufgrund der reinen Rollreibung ist bei einem Betätigungsmodul der in Fig. 10 erläuterten Art der Wirkungsgrad bei der Betätigung deutlich größer als bei den vorangehend beschriebenen Ausführungsbeispielen mit Gleitreibung zwischen den Hülsen. Ein weiterer Vorteil einer solchen Variante ist die Möglichkeit, eine nicht konstante, also in axialer Richtung sich ändernde Steigung der Gewindespindeln, vorzusehen. Hierdurch ist eine Anpassung der Betätigungskraft an den Ein- bzw. Ausrückkraftverlauf der jeweiligen Kupplungsanordnung leicht möglich. Gewindespindeln mit sich ändernder Steigung können beispielsweise derart aufgebaut sein, dass von den beiden Hülsen eines jeweiligen Hülsenpaares eine mit wenigstens einer umlaufenden Ringnut für wenigstens eine Kugel ausgeführt ist und die andere wenigstens eine Laufbahn mit sich ändernder Steigung für die Kugel bzw. Kugeln aufweist.

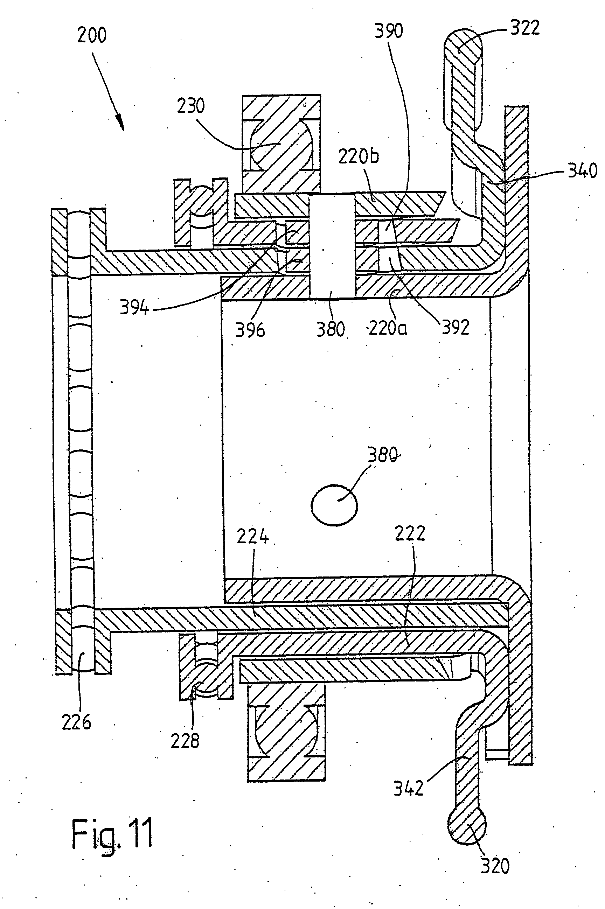

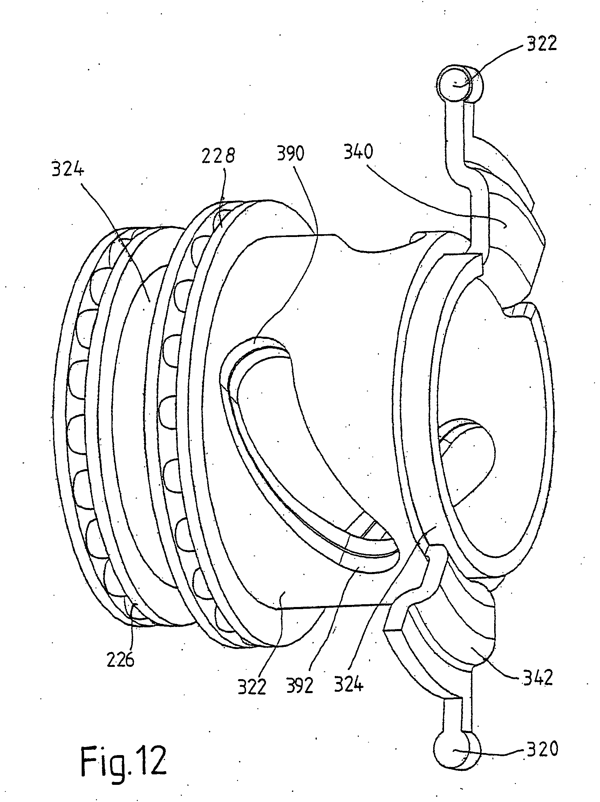

Ein besonders kostengünstig aus Blechmaterial herstellbares Betätigungsmodul 200 ist in Fig. 11 dargestellt. Das Betätigungsmodul weist als Stützglied eine innere Stützhülse 220a und eine äußere Stützhülse 220b auf, die durch mehrere, vorzugsweise mindestens drei sich radial erstreckende Bolzen 380 verbunden sind und verdrehsicher etwa an der Getriebewand befestigt sind bzw. befestigt werden. Die äußere Stützhülse 220b trägt das zentrale Stützlager 230. Zwischen den beiden Stützhülsen sind eine radial äußere Betätigungshülse 222 und eine radial innere Betätigungshülse 224 angeordnet, die jeweils ein vorzugsweise axialkraftübertragendes Einrück- bzw. Ausrücklager 226 bzw. 228 tragen. Die Stützhülsen und die Betätigungshülsen sind jeweils vorzugsweise aus Blech gefertigt. Die Betätigungshülsen weisen jeweils wenigstens einen, vorzugsweise als mindestens drei Durchbrüche oder Kulissen 390 bzw. 392 auf, und zwar für jeden Bolzen 380 genau eine Kulisse bzw. ein Durchbruch 390 bzw. 392. Die Bolzen 380 erstrecken sich durch die genannten Kulissen. Die Kulissen definieren jeweils eine Führungskurve, die über Gleitlager, ggf. Rollengleitlager 394 bzw. 396, mit dem jeweiligen Bolzen 380 in Führungseingriff stehen. Die Gleitlager 394, 396 können als gegenüber den Bolzen verdrehbare Ring- oder Hülsenteile ausgeführt sein und sind derart hinsichtlich ihrer Abmessungen und Positionen auf die Kulissen abgestimmt, dass sie an der ggf. nichtlinear verlaufenden Kurvenkontur der jeweiligen Kulisse abrollen können. Die Führungskurven oder Kurvenkonturen der Kulissen steigen in Umfangsrichtung axial an, und zwar entweder linear oder - vorzugsweise - nicht linear (vgl. das Ausführungsbeispiel der Fig. 12), so dass eine Drehbewegung der jeweiligen Betätigungshülse unter Vermittlung der jeweiligen Bolzen-Kulissen-Kombination (man kann auch von Kulissenfolger-Kulissen-Kombination sprechen) in eine Axialbewegung der betreffenden Betätigungshülse umgesetzt wird. Durch Einleitung einer Tangentialkraft auf den Betätigungshebel 340 bzw. 342, etwa am Kraftangrifspunkt 320 bzw. 322, wird die jeweilige Betätigungshülse radial und axial ähnlich einer Schraube bewegt, wie vorangehend beschrieben.

Anstelle der Gleitlager 394 und 396 könnten auch Wälzlagerungen, z. B. Rillenkugellager, vorgesehen sein. Insbesondere bei relativ kleinen zu übertragenden Axialkräften kann man unter Umständen auch auf jegliche Lagerung an den Bolzen 380 verzichten. Die Bolzen gleiten dann direkt an den Kurvenkonturen ab.

Betreffend die Verdrehsicherung und ggf. axiale Sicherung des Betätigungsmoduls 200 gemäß Fig. 10 und 11 sind grundsätzlich die verschiedensten Lösungen denkbar, insbesondere auch die Lösungen gemäß Fig. 5 und 6. Ferner sind für diese Betätigungsmodule auch die anderen, im Zusammenhang mit den Fig. 7 und 8 beschriebenen Betätigungsvarianten anwendbar.

Die Kombination der beiden Betätigungshülsen gemäß Fig. 11 ist in Fig. 12 in einer perspektivischen Ansicht gezeigt. Zu erkennen sind die Kulissen 390 und 392 der jeweiligen Betätigungshülse 322 bzw. 324, wobei jeweils drei Kulissen in Form von Durchbrüchen vorgesehen sind. Die Kulissen definieren nichlinear ansteigende Führungskurven, die die Umsetzung der jeweiligen Drehbewegung in die jeweilige Axialbewegung bestimmen.

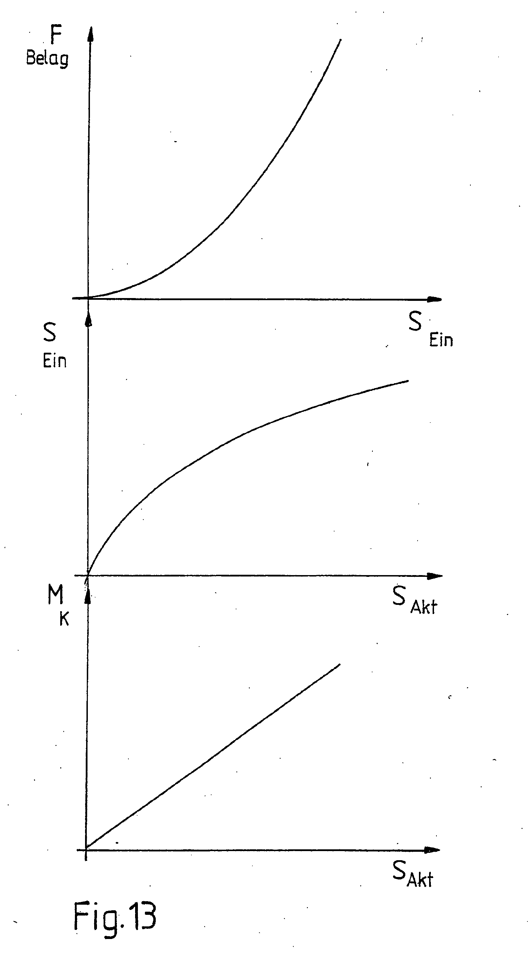

Derartige, nicht über den gesamten Drehstellweg lineare Steigungen der Führungskurve sind insbesondere zur Verbesserung der Modulierbarkeit vorteilhaft. Hintergrund ist die angestrebte Verbesserung der Modulierbarkeit über den Einrückweg. Im Falle einer Kupplung des NORMALERWEISE-OFFEN-Typs liefert die Belagfederungskennlinie (vgl. das oberste Diagramm der Fig. 13) eine relativ starke Nichtlinearität, da die Belagfederung während des Einrückvorgangs mit einer bestimmten, deutlich progressiven Kraft-Weg-Kennlinie (vgl. oberstes Diagramm der Fig. 13) komprimiert werden muss und dann ein im Wesentlichen zu dieser Kraft proportionales Drehmoment übertragen kann:

$$\text{Kupplungsmoment } M_k \sim \text{Einrückweg}^m, \; m > 1.$$

Um diese Nichtlinearität auszugleichen, kann die Betätigungsstrecke eine gegensinnige Nichtlinearität aufweisen (vgl. mittleres Diagramm der Fig. 13), so dass z. B. über eine degressive Steigung des Aktuatorwegs näherungsweise eine Beziehung erreicht wird:

$$\text{Einrückweg} \sim \text{Aktuatorweg}^p, \; p < 1.$$

Bei entsprechender Abstimmung der Nichtlinearitäten aufeinander (im Beispielsfalle m = p) kann man im Endeffekt eine im Wesentlichen lineare Beziehung zwischen dem Aktuatorweg und dem Kupplungsmoment erreichen (vgl. unterstes Diagramm der Fig. 13), also näherungsweise die Beziehung:

$$\text{Kupplungsmoment} \sim \text{Aktuatorweg}.$$

Hierdurch wird die Regelgüte (konstante Auflösung) bei einer geregelten Kupplungsbetätigung deutlich verbessert.

Angemerkt sei, dass man bei einer Verwendung einer Aktuatorik, die die Betätigungsglieder in beiden Drehrichtungen betätigen kann, also beispielsweise sowohl Druck- als auch Zugkräfte erzeugen und übertragen kann (beispielsweise elektromotorischer Aktuator oder ein doppelseitig wirkender hydraulischer Nehmerzylinder) sogar vorsehen kann, dass die Steigung am Ende des Einrückweges gleich Null wird, oder am Ende des Einrückwegs sogar geringfügig negativ wird. Auf diese Weise kann man erreichen, dass die jeweilige Kupplungsanordnung im eingekuppelten Zustand ohne Zuführung äußerer Stellkräfte oder Hilfsenergien selbständig geschlossen bleibt, was energetisch besonders vorteilhaft ist. Entsprechende Vorteile ergeben sich auch im Falle einer Kupplungsanordnung des NORMALERWEISE-GESCHLOSSEN-Typs.

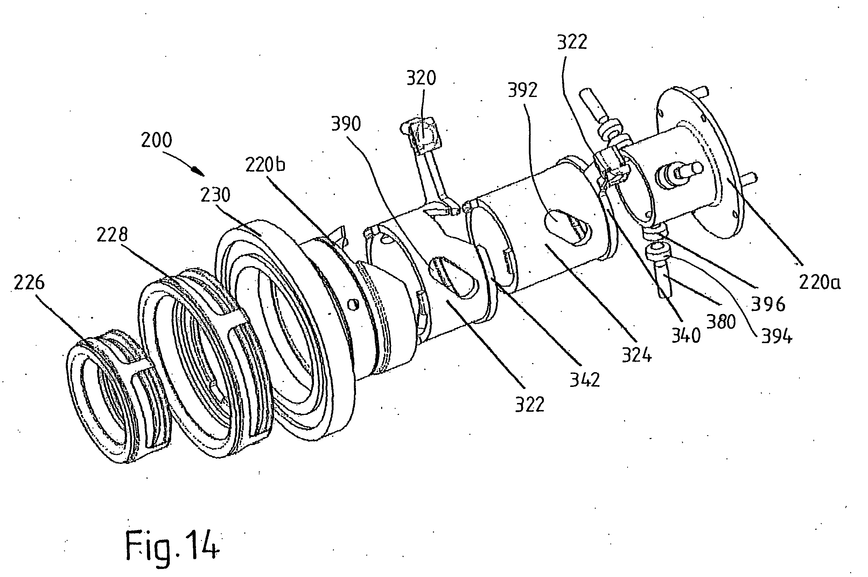

Fig. 14 zeigt eine Ausführungsform eines Betätigungsmoduls 200 von der prinzipiellen Bauart der Fig. 11 und 12 in einer Explosionsdarstellung. In Abweichung von Fig. 12 weisen die Betätigungshülsen 322 und 324 Kulissen 390 und 392 auf, die linear ansteigende Führungskurven definieren. Zu erkennen sind das innere Ausrücklager 226, das äußere Ausrücklager 228, das zentrale Stützlager 230, die äußere, im Betrieb feststehende Stützhülse 220b, die äußere Schiebe- oder Betätigungshülse 322 mit den Kulissen 390, dem äußeren Anlenkhebel 342 und der Kalotte 320, die innere Schiebe- oder Betätigungshülse 324 mit den Kulissen 392, dem inneren Anlenkhebel 340 und der Kalotte 322, die Bolzen- oder Lagerstifte 380, die Gleitlagerringe oder Buchsen 394 und 396 (beispielsweise aus PE/PTFE-Material) und die im Betrieb feststehende innere Stützhülse 220a.

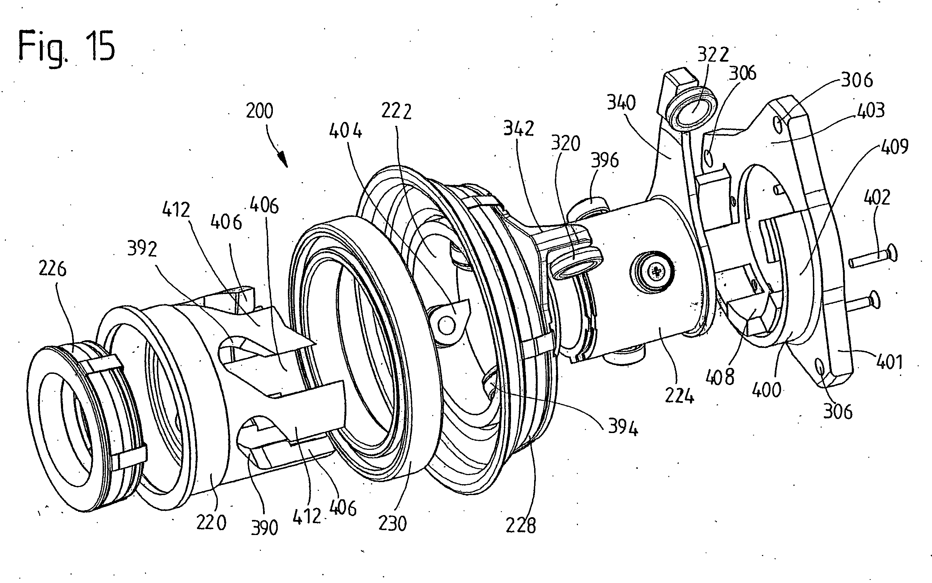

Fig. 15 zeigt eine weitere Ausführungsform eines erfindungsgemäßen Betätigungsmoduls 200, das ähnlich wie die Beispiele der Fig. 11, 12 und 14 mit Kulisse-Kulissenfolger-Anordnungen zum Umsetzen von Drehbewegungen in axiale Bewegungen ausgeführt ist. Das auch als Betätigungseinheit bezeichenbare Modul 200 weist eine zentrale Stützhülse 220 auf, die mittels eines zugehörigen Flanschteils 400 getriebeseitig lagerbar ist, wie im Folgenden noch näher erläutert wird. Der Stützhülse 220 ist ferner ein Stützlager 230 zugeordnet, über das eine Abstützbeziehung zu einem Kupplungsgehäuse oder dergleichen herstellbar ist, um - wie oben erläutert - einen im Wesentlichen geschlossenen Axialkraftfluss innerhalb eines eine Doppelkupplung und das Betätigungsmodul 200 umfassenden. Gesamtmoduls vorzusehen.

Als Betätigungsglieder sind eine innere Betätigungshülse 224 und eine äußere Betätigungshülse 222 vorgesehen, zwischen denen im zusammengebauten Zustand die Stützhülse 222 aufgenommen ist. Der inneren Betätigungshülse 224 ist das innere Ausrücklager 226 und der äußeren Betätigungshülse 222 ist das äußere Ausrücklager 228 zugeordnet. Zu erkennen sind die von den Betätigungshülsen radial vorstehenden Betätigungs- oder Anlenkhebel 340 und 342 samt Kalotten 322 und 320, an denen beispielsweise ein hydraulisches Zylinder-Kolben-Gerät angreifen kann. Das Betätigungsmodul der Fig. 15 ist bevorzugt zur Betätigung einer Doppelkupplung des NORMALERWEISE-OFFEN-Typs vorgesehen.

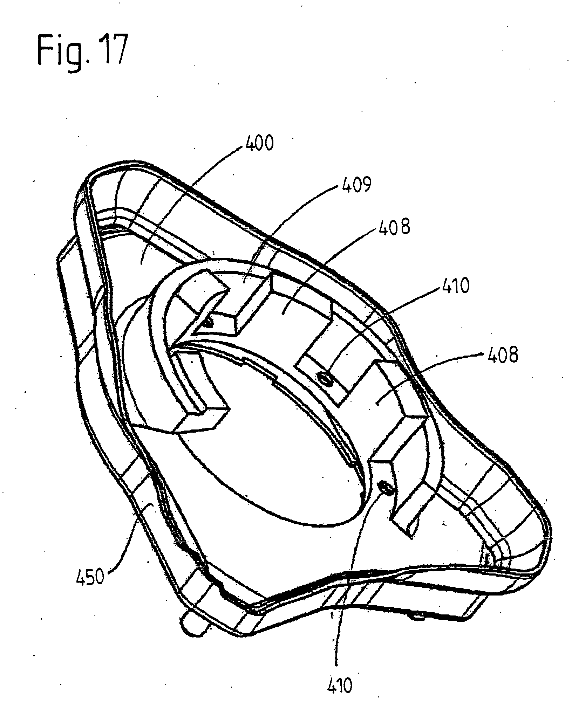

Die zentrale Stützhülse 220 und das in Fig. 17 in einer anderen perspektivischen Ansicht gezeigte Flanschteil 400 sind axial zusammensteckbar und mittels Schrauben 402 zu einer integralen Einheit verschraubbar, und können dann gemeinsam zutreffend als Stützglied oder Stützhülse mit Flansch angesprochen werden. Im Gegensatz zu den Beispielen der Fig. 11, 12 und 14 weist die Stützhülse 220 Kulissen 390 und 392 auf, die Führungskurven definieren, an denen an den Betätigungshülsen 224 und 222 axial fest angebrachte Kurvenfolge in Form von mittels eines jeweiligen Rillenkugellagers auf einem Bolzen laufenden Rollen 396 und 394 angreifen. Entsprechend dem Aufbau des Betätigungsmoduls 200 sind die Laufrollen 396 der radial inneren Betätigungshülle 224 auf deren Außenumfang und die Laufrollen 394 der radial äußeren Betätigungshülse 222 auf deren Innenumfang angebracht. Zur Sicherung der Laufrollen 324 an ihrem jeweiligen Bolzen können die Betätigungshülse 222 von radial innen nach radial außen umgreifende, beispielsweise U-förmige Befestigungsglieder 404 vorgesehen sein.

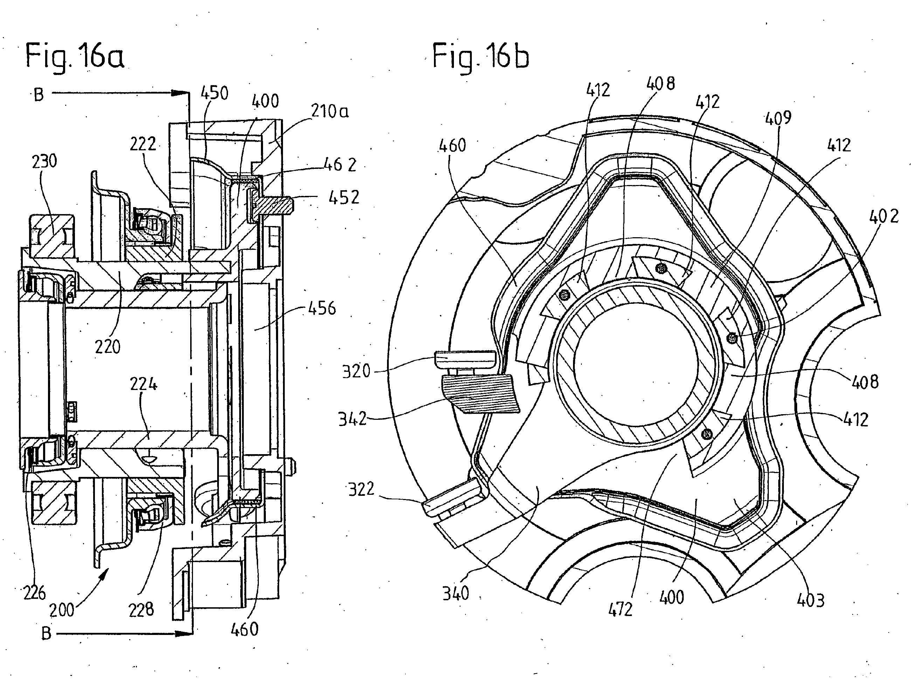

Die Kulissen 390 und 392 in der zentralen Stützhülse 220 gehen in axial verlaufende, in Richtung zum Getriebe hin offene Einführschlitze 406 über, so dass beim Zusammenstecken des Betätigungsmoduls die an der jeweiligen Betätigungshülse 222 bzw. 224 vormontierten Laufrollen 394 und 396 einfach in die jeweils zugeordnete Kulisse 390 bzw. 392 eingeführt werden können. Anschließend kann dann die Stützhülse 220 mit dem Flanschteil 400 zusammengesteckt und verschraubt werden. Beim Zusammenstecken der Stützhülse 220 und des Flanschteils 400 treten axial vorstehende Abschnitte 408 des Flanschteils in einige der Einführschlitze 406 ein, wodurch einige der Kulissen 390 und einige der Kulissen 392 verschlossen werden, so dass das Betätigungsmodul 200 insoweit zusammengehalten wird. Durchtrittslöcher für die Verbindungsschrauben 402 sind in Fig. 17 mit 410 bezeichnet. Die Schrauben 402 werden in Schrauböffnungen mit Innengewinde in zwischen den Einführschlitzen 406 liegenden Abschnitten 412 der Stützhülse 220 eingeschraubt, wie insbesondere in der Schnittansicht der Fig. 16b gut zu erkennen ist.

Das Flanschteil 400 kann mit Öffnungen 306 in radial vorstehenden Flansch- oder Lappenabschnitten 403 ausgeführt sein, die Haltebolzen am Getriebegehäuse bzw. der Abstützbasis aufnehmen zu können, um eine radiale Fixierung und Drehsicherung der Stützhülse 220 entsprechend Fig. 6 vorzusehen. Demgegenüber ist aber eine andere Art der radialen Fixierung und Drehsicherung der Stützhülse und damit des gesamten Betätigungsmoduls 200 bevorzugt, die im Folgenden anhand der Fig. 16 bis 20 erläutert wird. Die Fig. 16 bis 20 zeigen insoweit ein erfindungsgemäßes Ausführungsbeispiel nach einem anderen Aspekt der Erfindung, der auch unabhängig von der Art des Betätigungsmoduls und dessen Funktionsweise von Interesse ist. Eine derartige radiale Fixierung und Drehsicherung kommt beispielsweise auch für Betätigungsmodule oder Betätigungseinheiten auf Grundlage eines oder mehrerer hydraulischer Betätigungszylinder, insbesondere Ringzylinder, in Betracht. Ohne Beschränkung der Allgemeinheit wird die Erfindung gleichwohl anhand dem Betätigungsmodul 200 der Fig. 15 näher erläutert.

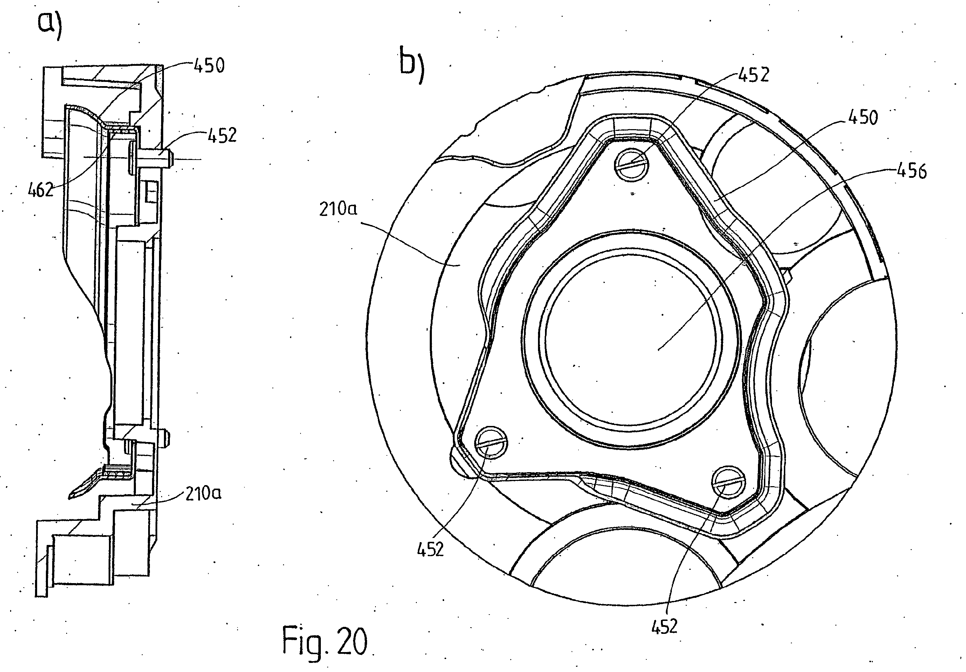

Wesentlicher Gesichtspunkt der Erfindung ist, eine getriebeseitige Halterung vorzusehen, in die das Betätigungsmodul einsteckbar ist, bezogen auf das Ausführungsbeispiel der Fig. 15 mit dem als Flansch ausgeführten bzw. Flanschabschnitte aufweisenden axialen Ende des Flanschteils 400. Die Öffnungen 306 gemäß Fig. 15 können dabei entfallen. Als getriebeseitiger Halterung kann beispielsweise eine integral oder einteilig ins Getriebegehäuse eingearbeitete Aufnahme oder ein am Getriebe angebrachtes, eine entsprechende Aufnahme aufweisendes Halterungsteil vorgesehen sein. Die Fig. 16 bis 20 zeigen ein eine derartige Aufnahme bildendes Halterungsteil 450, das schalenähnlich oder korbähnlich ausgeführt ist und gemäß Fig. 16 und Fig. 20 mittels durch Öffnungen 453 greifenden Schrauben 452 an einem Abschnitt 210a des Getriebegehäuses angeschraubt ist, so dass eine Durchtrittsöffnung 454 in einem Bodenabschnitt 455 des Halterungsteils 450 für die Getriebeeingangswellen mit einer entsprechenden Durchtrittsöffnung 456 im Getriebegehäuse für die Getriebeeingangswellen im Wesentlichen zusammenfällt.

Das Halterungsteil 450 kann zweckmäßig als Blechteil, beispielsweise aus Stahlblech tiefgezogen, ausgeführt sein. Eine andere Möglichkeit ist, das Halterungsteil als Kunststoffspritzteil auszuführen.

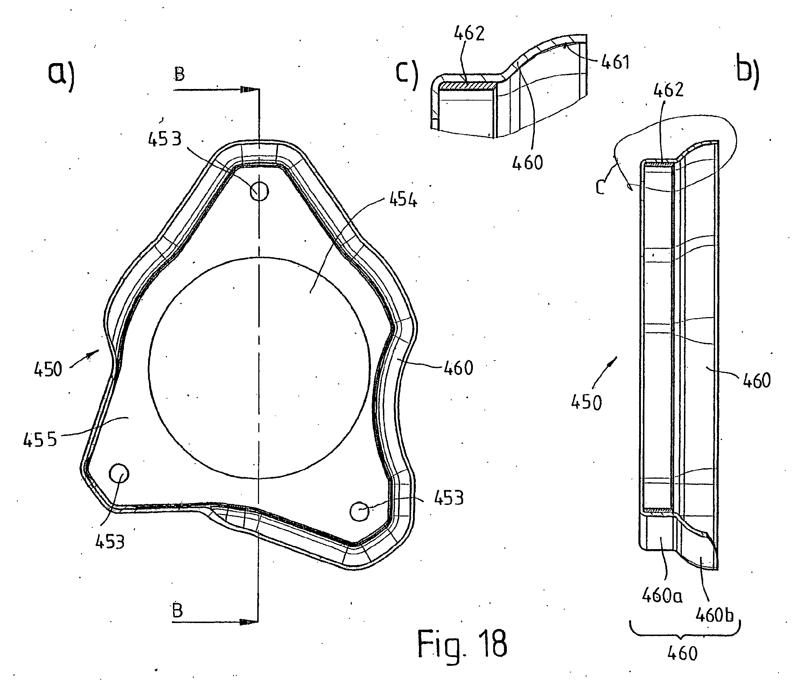

Das Flanschteil 400, das ebenso wie die Stützhülse 220 und die Betätigungshülsen 122 und 124 aus üblichen Materialien, etwa Stahl, Kunststoff, Alumium (ggf. als Druckgußteil) ausgeführt sein kann, und das Halterungsteil 450 sind derart aufeinander abgestimmt, dass das Flanschteil bzw. dessen axialer Endabschnitt ohne wesentliches Spiel oder - bevorzugt - mit definiertem Spiel in die vom Halterungsteil gebildete, ringsum von einer Wandung 460 des Halterungsteils 400 eingesteckt werden kann, wobei zweckmäßig die Abstimmung derart sein kann, dass radial zwischen dem Endabschnitt des Flanschteils und der Wandung 460 noch eine Elastomereinlage 462 etwa in Form eines Elastomerrings vorgesehen sein kann, der eine direkte Anlage einer Außenoberfläche 401 des Flanschteils 400 an einer Innenoberfläche 461 der Wandung 460 verhindert, gleichwohl aber radiale Ausgleichsbewegungen des Flanschteils 400 und damit des Moduls 200 etwa zum Ausgleich eines Achsversatzes zwischen Abtriebswelle der Antriebseinheit (insbesondere Kuppelwelle des Antriebsmotors) und den Getriebeeingangswellen ermöglicht. Es ist zwar durchaus auch möglich, nur hinreichendes Radialspiel zwischen dem Flanschteil 400 und der Wandung 460 des Haltungsteils 450 vorzusehen und auf eine Elastomereinlage oder dergleichen zu verzichten, dies könnte aber zu Geräuschentwicklungen im Betrieb führen. Es ist deshalb bevorzugt, die insbesondere in Fig. 18 gut erkennbare Elastomereinlage 462 vorzusehen.

Um die Montage bzw. Plazierung des Betätigungsmoduls 200 am Getriebe zu erleichtern, ist die Wandung 460 des Halterungsteils 450 mit einem im Wesentlichen axial verlaufenden Abschnitt 460a und einem sich hieran anschließenden, sich nach radial außen erweiternden Abschnitts 460b ausgeführt. Der axial verlaufende Abschnitt 460a definiert mit seiner Innenoberfläche die Soll-Position bzw. den Soll-Positionsbereich für das Flanschteil 400. Der Abschnitt 460b dient nur als Montagehilfe, indem seine Innenoberfläche als Einfädel-Oberfläche oder Einlaufschräge für das zu montierende bzw. plazierende Betätigungsmodul, genauer für das Flanschteil dieses Betätigungsmoduls, dient. Es ist deswegen nicht erforderlich, das Modul in einer exakt einzuhaltenden Radial- und Drehposition relativ zum Getriebe exakt axial in Richtung zum Getriebe zuzuführen, wenn das Flanschteil 400 in die vom Wandabschnitt 460a begrenzte Aufnahme des Halterungsteils 450 eingesteckt werden soll.

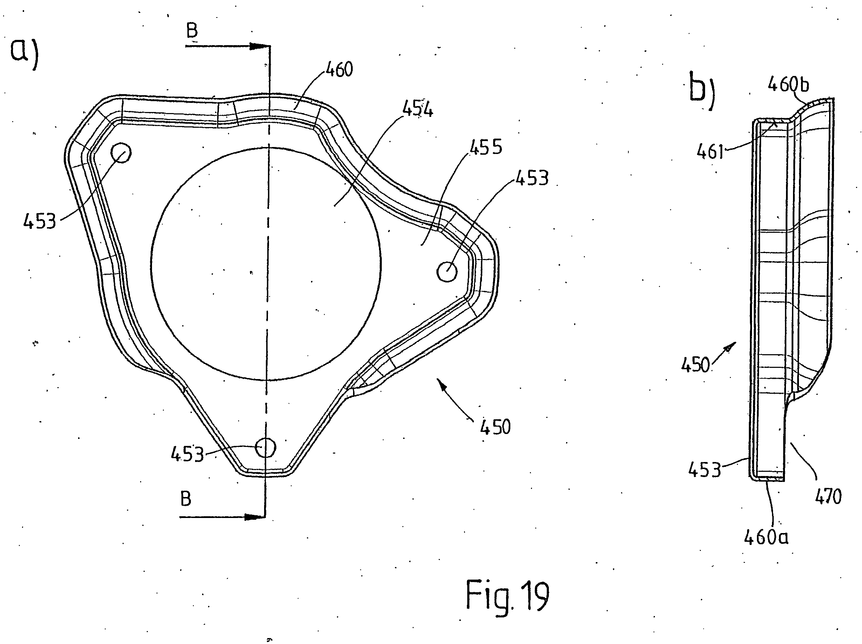

Es ist noch auf folgendes hinzuweisen. Um dem Hebel 340 hinreichenden Spielraum für eine Dreh- bzw. Schwenkbewegung im Zuge einer Kupplungsbetätigung zu geben, erstreckt sich der Wandabschnitt 460b nicht vollständig ringsum die Aufnahme, wie insbesondere in Fig. 19b gut zu erkennen. Die für den Hebel frei gelassene Aussparung ist in Fig. 19b mit 470 bezeichnet. Aus dem gleichen Grund ist auch das Flanschteil 400 nicht mit einem ringsum verlaufenden Kranz von Abschnitten 408 und einem sich hieran nach radial außen anschließenden Ringabschnitt 409 ausgeführt, sondern nur mit einem Teilkranz bzw. Teilring, der eine Aussparung 472 für den Hebel 340 frei lässt. Um trotzdem eine auch hohe Radialkräfte aufnehmende Verbindung zwischen dem Flanschteil 400 und der Stützhülse 220 vorzusehen, greifen die Abschnitte 412 des Stützteils 120 und die Abschnitte 408 des Flanschteils 400 in der Art einer Schwalbenschwanzverbindung ineinander (vgl. Fig. 16).

Die vorstehend anhand der Fig. 16 bis 18 beschriebene Halterungslösung für die Halterung des Betätigungsmoduls am Getriebe bietet ebenso wie die oben schon erläuterte Lösung gemäß Fig. 6 den Vorteil, dass das Betätigungsmodul axial frei beweglich bleiben kann, wenn dies gewünscht ist. Gleichwohl werden Reaktionsmomente, die aus einer Betätigung der Hebel resultieren, zuverlässig aufgenommen, wobei auf Grund der in Figuren erkennbaren Ausgestaltung des Flanschteils 400 und des Halterungsteils 450 erreicht wird, das diese Reaktionsmomente ringsum und damit über eine große Oberfläche abgestützt werden.

Es sei angemerkt, dass man durchaus auch das Betätigungsmodul axial festlegen könnte. Es ist aber durchaus vorteilhaft, wenn axiale Bewegungen, die etwa aus einem Kurbelwellenaxialspiel resultieren können, von dem Betätigungsmodul bzw. einem die Kupplung und das Modul umfassenden Gesamtmodul mitgemacht werden können, ohne dass eine Axiallast auf die Kurbelwelle wirkt.

Vermittels des Halterungsteils wird das Flanschteil 400 und damit das gesamte Betätigungsmodul zuverlässig zentriert, wie vorstehend erwähnt vorzugsweise über die gesamte Außenkontur 401 des Flanschabschnitts des Flanschteils 400. Um Zwängungen oder Verspannungen etwa in Folge eines Achsversatzes zwischen dem Motor und dem Getriebe und hierdurch eine möglicherweise erfolgende Anhebung der Taumeleigenfrequenz des Gesamtmoduls zu vermeiden, ist das Flanschteil 400 bevorzugt mit radialem Bewegungsspiel in der Aufnahme aufgenommen, ggf. mit elastischer Vorspannung in eine Zentrierungsposition durch eine Elastomereinlage oder dergleichen. Eine beispielsweise als Elastomerprofil ausgeführte Elastomereinlage kann zuverlässig verhindern, dass es durch unmittelbares Anstoßen des Flanschteils 400 an der Wandung 460 auf Grund von Schwingungen zu unerwünschten Geräuschentwicklungen kommt. Es sollte erwähnt werden, dass das erwähnte Radialspiel zwischen dem Flanschteil 400 und dem Halterungsteil 450 bzw. die angesprochene Elastomereinlage ggf. auch eine leichte "Schiefstellung", also eine leichte Verdrehung gegenüber einer durch den Verlauf des Wandabschnitts 460a und des Verlaufs der zugeordneten Außenoberfläche des Flanschteils 400 definierten Mittelstellung in der Aufnahme zuläßt.

Betreffend die Ausgestaltung der Außenkontur des Einsteckabschnitts des Stützglieds, vorliegend des Flanschabschnitts des Flanschteils 400, und der Ausgestaltung der Innenkontur der getriebeseitigen Halterungsaufnahme, vorliegend der Innenkontur des Wandabschnitts 460a, bestehen vielfältige Möglichkeiten. Es sollte im Rahmen der baulichen Möglichkeiten angestrebt werden, die im Betrieb aufstehenden Reaktionskräfte bzw. Drehkräfte über einen möglichst großen Umfangswinkel verteilt abzustützen. So ist eine Abstützung über einen Umfangswinkel von insgesamt wenigstens etwa 90 Grad, vorzugsweise wenigstens etwa 180 Grad, höchst vorzugsweise wenigstens etwa 270 Grad vorteilhaft. Beim gezeigten Ausführungsbeispiel werden die im Betrieb auftretenden Reaktionskräfte nahezu über den vollständigen Umfangswinkel von 360 Grad abgestützt.

**Patentansprüche**

1. Betätigungseinrichtung für eine im Antriebsstrang eines Kraftfahrzeugzeugs angeordnete Mehrfach-Reibungskupplungseinrichtung, ggf. Doppel-Reibungskupplungseinrichtung, zum Einleiten von Betätigungskräften, insbesondere Einrück- oder Ausrückkräften, in die Reibungskupplungseinrichtung, um wahlweise eine erste oder/und eine zweite Reibungskupplungsanordnung der Reibungskupplungseinrichtung im Einrück- oder Ausrücksinne zu betätigen, umfassend wenigstens ein der ersten Reibungskupplungsanordnung zugeordnetes erstes Betätigungsglied (224) und wenigstens ein der zweiten Reibungskupplungsanordnung zugeordnetes zweites Betätigungsglied (222), die relativ zu wenigstens einem axial im Wesentlichen feststehenden Stützglied (220) zum Ausüben der Betätigungskräfte axial verstellbar sind und jeweils zu einem der jeweiligen Kupplungsanordnung zugeordneten Aktuator gehören oder unter Vermittlung eines der jeweiligen Kupplungsanordnung zugeordneten Aktuators axial relativ zum Stützglied (220) verstellbar sind, **gekennzeichnet durch** einen derartigen Eingriff zwischen dem ersten (224) und zweiten (222) Betätigungsglied einerseits und dem Stützglied (220) andererseits, dass eine unter Vermittlung des jeweiligen Aktuators dem jeweiligen Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird.

2. Betätigungseinrichtung für eine im Antriebsstrang eines Kraftfahrzeugzeugs angeordnete Reibungskupplungseinrichtung zum Einleiten von Betätigungskräften, insbesondere Einrück-oder Ausrückkräften, in die Reibungskupplungseinrichtung, um wenigstens eine Reibungskupplungsanordnung der Reibungskupplungseinrichtung im Einrück-oder Ausrücksinne zu betätigen, umfassend wenigstens ein der oder einer Reibungskupplungsanordnung zugeordnetes Betätigungsglied (222; 224), das relativ zu wenigstens einem axial im Wesentlichen feststehenden Stützglied (220) zum Ausüben der Betätigungskräfte axial verstellbar ist und zu einem der Kupplungsanordnung zugeordneten Aktuator gehört oder unter Vermittlung eines der Kupplungsanordnung zugeordneten Aktuators axial relativ zum Stützglied (220) verstellbar ist, **gekennzeichnet durch** einen derartigen Eingriff zwischen dem Betätigungsglied (222; 224) und dem Stützglied (220), dass eine unter Vermittlung des Aktuators dem Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird.

3. Betätigungseinrichtung nach Anspruch 1 oder 2, **dadurch gekennzeichnet, dass** das Stützglied und das Betätigungsglied bzw. das Stürzglied (220) und das erste oder/und zweite Betätigungsglied (222, 224) in gegenseitigem Spindel- oder Gewindeeingriff oder in gegenseitigemKurve-Kurvenfolger-EingriffoderRampe-Gegenrampe-Eingriff stehen.

4. Betätigungseinrichtung nach einem der Ansprüche 1 bis 3, **dadurch gekennzeichnet, dass** von dem Stützglied (220) und dem (jeweiligen) Betätigungsglied (222; 224) ein Glied ein ein- oder mehrgängiges Außengewinde in einer im Wesentlichen kreiszylindrischen Außenumfangsfläche und das andere Glied ein ein- oder mehrgängiges Innengewinde im einer im Wesentlichen kreiszylindrischen Innenumfangfläche aufweist, wobei das Außengewinde und das Innengewinde in direktem gleitenden Eingriff oder in durch wenigstens einen Roll- oder Wälzkörper oder durch wenigstens einen Gleitkörper vermittelten Eingriff miteinander stehen.

5. Betätigungseinrichtung nach Anspruch 4, **dadurch gekennzeichnet, dass** das Innengewinde und das Außengewinde als Flachgewinde, Trapezgewinde oder Rundgewinde ausgeführt sind.

**6.** Betätigungseinrichtung nach Anspruch 4, **dadurch gekennzeichnet, dass** das Innengewinde und das Außengewinde mit mehreren als Roll- oder Wälzkörper dienenden Kugeln (374) sowie ggf. mit einem in dem anderen Glied ausgebildeten Kugelrücklauf einen Kugelgewindetrieb bilden.

**7.** Betätigungseinrichtung nach einem der Ansprüche 1 bis 4, **dadurch gekennzeichnet, dass** von dem Stützglied und dem (jeweiligen) Betätigungsglied ein Glied ein ein- oder mehrgängiges Außengewinde in einer im Wesentlichen kreiszylindrischen Außenumfangsfläche oder ein ein- oder mehrgängiges Innengewinde in einer im Wesentlichen kreiszylindrischen Innenumfangfläche und das andere Glied wenigstens einen an diesem Glied axial abgestützten Gewindeeingreifer aufweist, der von einer Innenumfangsfläche des anderen Glieds nach radial innen vorsteht und in das Außengewinde eingreift bzw. von einer Außenumfangsfläche nach radial außen vorsteht und in das Innengewinde eingreift.

**8.** Betätigungseinrichtung nach Anspruch 7, **dadurch gekennzeichnet, dass** der Gewindeeingreifer als Roll- oder Wälzkörper oder als Gleitkörper ausgeführt ist und vorzugsweise am anderen Glied in einer zugeordneten Führungs-Ringnut in Umfangsrichtung beweglich geführt ist.

**9.** Betätigungseinrichtung nach Anspruch 7 oder 8, **dadurch gekennzeichnet, dass** das Außengewinde bzw. das Innengewinde eine in axialer Richtung sich ändernde Gewindesteigung aufweist.

**10.** Betätigungseinrichtung nach einem der Ansprüche 1 bis 3, **dadurch gekennzeichnet, dass** das Stützglied und das (jeweilige) Betätigungsglied mit sich in Umfangsrichtung erstreckenden, in Umfangsrichtung axial ansteigenden Rampenbereichen ausgeführt sind, die - ggf. unter Vermittlung von Wälz- oder Rollkörpern - die Drehbewegung in die Translationsbewegung umsetzen.

**11.** Betätigungseinrichtung nach einem der Ansprüche 1 bis 3, **dadurch gekennzeichnet, dass** von dem Stützglied (220a, 220b) und dem (jeweiligen) Betätigungsglied (222; 224) ein Glied wenigstens eine sich in Umfangsrichtung erstreckende, in Umfangsrichtung axial ansteigende Führungskurve (390; 392) und das andere Glied wenigstens einen mit der Führungskurve direkt oder indirekt in Eingriff stehenden oder bringbaren Kurvenfolger (380) aufweist, die - gegebenfalls unter Vermittlung einer Gleitlager- oder Wälzlageranordnung (394; 396) - die Drehbewegung in die Translationsbewegung umsetzen.

**12.** Betätigungseinrichtung nach Anspruch 11, **dadurch gekennzeichnet, dass** die Führungskurve (390; 392) in Umfangsrichtung linear axial ansteigt.

**13.** Betätigungseinrichtung nach Anspruch 11, **dadurch gekennzeichnet, dass** die Führungskurve (390; 392) in Umfangsrichtung nichtlinear axial ansteigt.

**14.** Betätigungseinrichtung nach einem der Ansprüche 11 bis 13, **dadurch gekennzeichnet, dass** in einer Außenumfangsfläche oder/und Innenumfangsfläche des einen Glieds wenigstens eine sich in Umfangsrichtung erstreckende, die Führungskurve definierende Aussparung oder Öffnung (390; 392) vorgesehen ist, die als Kulisse dient, in die der oder ein zugeordneter, als Kulissenfolger ausgebildete(r) Kurvenfolger (380) eingreift.

**15.** Betätigungseinrichtung nach einem der Ansprüche 11 bis 14, **dadurch gekennzeichnet, dass** das (jeweilige) Betätigungsglied die Führungskurve bzw. die Kulisse (390; 392) aufweist.

**16.** Betätigungseinrichtung nach einem der Ansprüche 1 bis 15, **dadurch gekennzeichnet, dass** das Stützglied und das Betätigungsglied bzw. die Betätigungsglieder von koaxial zueinander angeordneten Hülsen (220, 222, 224; 220a, 220b, 222, 224) gebildet sind.

**17.** Betätigungseinrichtung nach Anspruch 16, **dadurch gekennzeichnet, dass** das oder wenigstens ein Betätigungsglied von einer Außenhülse (222) gebildet ist, die eine als Stützglied dienende Stützhülse (220) zumindest bereichsweise radial außen umschließt.

**18.** Betätigungseinrichtung nach Anspruch 16 oder 17, **dadurch gekennzeichnet, dass** das oder wenigstens ein Betätigungsglied von einer Innenhülse (224) gebildet ist, und dass eine/die als Stützglied dienende Stützhülse (220) die Innenhülse (224) zumindest bereichsweise radial außen umschließt.

**19.** Betätigungseinrichtung nach Anspruch 16, **dadurch gekennzeichnet, dass** als Stützglied eine radial äußere Stütz-Außenhülse (220b) und eine radial innere Stütz-Innenhülse (220a) vorgesehen sind, und dass das oder wenigstens ein Betätigungsglied von einer Zwischenhülse (222; 224) gebildet ist, die radial zwischen der Stütz-Außenhülse und der Stütz-Innenhülse angeordnet ist.

**20.** Betätigungseinrichtung nach Anspruch 19 in Rückbeziehung auf Anspruch 11, **dadurch gekennzeichnet, dass** die Zwischenhülse (222; 224) mit wenigstens einer Führungskurve (390; 392) ausgeführt ist, die direkt oder indirekt mit einem sich radial zwischen der Stütz-Außenhülse (220b) und der Stütz-Innenhülse (220a) erstreckenden Kurvenfolger (380) in Eingriff steht oder in Eingriff bringbar ist.

21. Betätigungseinrichtung nach Anspruch 20, **dadurch gekennzeichnet, dass** der Kurvenfolger einen an der Stütz-Außenhülse (220b) oder/und der Stütz-Innenhülse (220a) gehaltenen Bolzen (380) umfasst.

22. Betätigungseinrichtung nach einem der Ansprüche 1 bis 21, **dadurch gekennzeichnet, dass** das Stützglied (220a, 220b) und das Betätigungsglied bzw. die Betätigungsglieder (222, 224) als Blechteile ausgeführt sind.

23. Betätigungseinrichtung nach einem der Ansprüche 1 bis 21, **dadurch gekennzeichnet, dass** das Stützglied (220) und das Betätigungsglied bzw. die Betätigungsglieder (222, 224) als Kunststoffmaterialteile ausgeführt sind, wobei von dem Stützglied und dem Betätigungsglied bzw. von einem jeweiligen Stützglied-Betätigungsglied-Paar vorzugsweise ein Glied aus einem weicheren und das andere Glied aus einem härteren Kunststoffmaterial hergestellt ist.

24. Betätigungseinrichtung nach einem der Ansprüche 1 bis 21, **dadurch gekennzeichnet, dass** von dem Stützglied (220) und dem Betätigungsglied (222; 224) bzw. von einem jeweiligen Stützglied-Betätigungsglied-Paar ein Glied aus einem Metallmaterial, vorzugsweise aus Aluminium, und das andere Glied aus einem Kunststoffmaterial hergestellt ist.

25. Betätigungseinrichtung nach Anspruch 23 oder 24, **dadurch gekennzeichnet, dass** wenigstens eines der Glieder bzw. dass das andere Glied zumindest bereichsweise aus einem gleitmodifizierten oder/und selbstschmierenden Kunststoffmaterial hergestellt ist.

26. Betätigungseinrichtung nach einem der Ansprüche 1 bis 25, **dadurch gekennzeichnet, dass** dem (jeweiligen) Betätigungsglied ein (222; 224) translatorischer Aktuator zugeordnet ist, der mit dem Betätigungsglied über eine eine translatorische in eine rotatorische Bewegung umsetzende Koppelmechanik (320; 322) bewegungsverkoppelt oder bewegungsverkoppelbar ist.

27. Betätigungseinrichtung nach Anspruch 26, **dadurch gekennzeichnet, dass** die Koppelmechanik ein durch den Aktuator translatorisch antreibbares, an der Betätigungsglied oder einem Hebelabschnitt (340; 342) desselben angreifendes und in einer zur Drehachse im Wesentlichen orthogonalen Ebene schwenkbares Zug- oder/und Schubglied umfasst, über das eine im Wesentlichen tangential gerichtete Betätigungskraft auf das Betätigungsglied übertragbar ist.

28. Betätigungseinrichtung nach einem der Ansprüche 1 bis 25, **dadurch gekennzeichnet, dass** dem (jeweiligen) Betätigungsglied ein rotatorischer Aktuator zugeordnet ist, der mit dem Betätigungsglied (222; 224) direkt oder über eine Koppelmechanik (348, 344; 350, 346; 364, 344; 366, 346) bewegungsverkoppelt oder bewegungsverkoppelbar ist.

29. Betätigungseinrichtung nach Anspruch 28, **dadurch gekennzeichnet, dass** der Aktuator ein Ausgangsteil (364; 366) aufweist, welches eine zur Drehachse (A) des Betätigungsglieds (222; 224) zumindest näherungsweise parallele Drehachse (B) aufweist.

30. Betätigungseinrichtung nach Anspruch 28 oder 29, **dadurch gekennzeichnet, dass** der Aktuator und das Betätigungsglied (222; 224) über ein Zahnradgetriebe (364, 344; 366, 346) bewegungsverkoppelt oder bewegungsverkoppelbar sind.

31. Betätigungseinrichtung nach Anspruch 30, **dadurch gekennzeichnet, dass** das Zahnradgetriebe ein aktuatorseitiges Zahnrad (364; 366) als Eingangsteil und ein betätigungsgliedseitiges Zahnrad oder einen betätigungsgliedseitigen Zahnradsektor oder Zahnkranz oder Zahnkranzsektor (344; 346) als Ausgangsteil aufweist.

32. Betätigungseinrichtung nach Anspruch 28, **dadurch gekennzeichnet, dass** der Aktuator ein Ausgangsteil (348; 350) aufweist, welches eine zur Drehachse (A) des Betätigungsglieds (222; 224) zumindest näherungsweise orthogonale Drehachse aufweist.

33. Betätigungseinrichtung nach Anspruch 28 oder 32, **dadurch gekennzeichnet, dass** der Aktuator und das Betätigungsglied (222; 224) über ein Schneckengetriebe (348, 344; 350; 346) bewegungsverkoppelt oder bewegungsverkoppelbar sind.

34. Betätigungseinrichtung nach Anspruch 33, **dadurch gekennzeichnet, dass** das Schneckengetriebe eine aktuatorseitige Schnecke (348; 350) als Eingangsteil und ein betätigungsgliedseitiges Zahnrad oder einen betätigungsgliedseitigen Zahnradsektor oder Zahnkranz oder Zahnkranzsektor (344; 346) als Ausgangsteil aufweist.

35. Betätigungseinrichtung nach einem der Ansprüche 26 bis 34, **dadurch gekennzeichnet, dass** einem/ dem Ausgangsteil des Aktuators oder/und einer Momentenübertragungskomponente der Koppelmechanik bzw. des Getriebes oder/und dem Betätigungsglied eine ggf. als Reibungsbremse (356; 358) ausgeführte Arretierung zugeordnet ist, die dafür ausgelegt ist, unabhängig von einem momentanen Aktivierungszustand des Aktuators einen momentanen Kupplungsbetätigungszustand entsprechend einer momentanen Axial- und Drehposition des Betätigungsglieds zu halten.

36. Betätigungseinrichtung nach Anspruch 35, **dadurch gekennzeichnet, dass** die Arretierung aktivierbar und deaktivierbar ist.

37. Betätigungseinrichtung nach einem der Ansprüche 1 bis 36, **dadurch gekennzeichnet, dass** das Stützglied wenigstens einen Drehabstützabschnitt (300; 304) aufweist, der mit wenigstens einem zugeordneten Gegen-Drehabstützabschnitt (302; 308) einer gegenüber der Kupplungseinrichtung stationären Abstützbasis, insbesondere eines Gehäuses eines Getriebes des Antriebsstrangs, in formschlüssigen Drehabstützeingriff steht oder bringbar ist, um das Stützglied gegen Verdrehung abzustützen.

38. Betätigungseinrichtung nach einem der Ansprüche 1 bis 37, **dadurch gekennzeichnet, dass** das Stützglied wenigstens einen Axialsicherungsabschnitt (300) aufweist, der mit wenigstens einem zugeordneten Gegen-Axialsicherungsabschnitt (302) einer gegenüber der Kupplungseinrichtung stationären Abstützbasis, insbesondere eines Gehäuses eines Getriebes des Antriebsstrangs, in formschlüssigen Axialsicherungseingriff steht oder bringbar ist, um das Stützglied im Antriebsstrang axial zu sichern.

39. Betätigungseinrichtung nach Anspruch 37 und 38, **dadurch gekennzeichnet, dass** der Drehabstützabschnitt (300) und der Gegen-Drehabstützabschnitt (302) zugleich als Axialsicherungsabschnitt und Gegen-Axialsicherungsabschnitt dienen.

40. Betätigungseinrichtung nach Anspruch 39, **dadurch gekennzeichnet, dass** der Drehabstützabschnitt (300) und der Gegen-Drehabstützabschnitt (302) in bajonettverschlussartigen Eingriff bringbar sind.

41. Betätigungseinrichtung nach einem der Ansprüche 1 bis 40, **dadurch gekennzeichnet, dass** sie eine als Einheit handhabbare Betätigungseinheit (200) aufweist, die das wenigstens eine Stützglied (220) und das wenigstens eine Betätigungsglied (222, 225) umfasst.

42. Betätigungseinheit für eine im Antriebsstrang eines Kraftfahrzeugzeugs zwischen einer Antriebseinheit und einem Getriebe angeordnete Reibungskupplungseinrichtung zum Einleiten von Betätigungskräften, insbesondere Einrück- oder Ausrückkräften, in die Reibungskupplungseinrichtung, um wenigstens eine Reibungskupplungsanordnung der Reibungskupplungseinrichtung im Einrück-oder Ausrücksinne zu betätigen, samt einer zugehörigen getriebeseitigen Halterung (450), wobei die Betätigungseinheit (200) wenigstens ein der oder einer Reibungskupplungsanordnung zugeordnetes Betätigungsglied (222; 224) umfasst, das relativ zu wenigstens einem axial im Wesentlichen feststehenden Stützglied (220) zum Ausüben der Betätigungskräfte axial verstellbar ist und zu einem der Kupplungsanordnung zugeordneten Aktuator gehört oder unter Vermittlung eines der Kupplungsanordnung zugeordneten Aktuators axial relativ zum Stützglied (220) verstellbar ist, und wobei die getriebeseitige Halterung (450) eine Sicherung der Betätigungseinheit (200) gegen ein Verdrehen im Zuge einer Kupplungsbetätigung vorsieht und gewünschtenfalls eine axiale Bewegung der Betätigungseinheit (200) relativ zum Getriebe (210a) zulässt,

**dadurch gekennzeichnet,**

**dass** die getriebeseitige Halterung eine am Getriebe drehfest fixierte oder fixierbare Halterungsaufnahme (450) aufweist, in die ein an die Halterungsaufnahme querschnittsangepasster getriebeseitiger Einsteckabschnitt (400) der Betätigungseinheit (200), der mit dem Stützglied (220) direkt oder indirekt verbunden oder mit diesem einteilig ist, axial eingesteckt oder einsteckbar ist, wobei die Halterungsaufnahme wenigstens eine Innenoberfläche (461) aufweist, an der wenigstens eine Außenoberfläche (401) des Einsteckabschnitts (400) gegen Verdrehen direkt oder indirekt abstützbar ist.

43. Betätigungseinheit samt getriebeseitiger Halterung nach Anspruch 42, **dadurch gekennzeichnet, dass** die Betätigungseinheit (200) vermittels eines direkten oder indirekten Zentrierungseingriffs zwischen der Innenoberfläche (461) und der Außenoberfläche (401) am Getriebe (210a) zentrierbar ist.

44. Betätigungseinheit samt getriebeseitiger Halterung nach Anspruch 42 oder 43, **dadurch gekennzeichnet, dass** die Innenoberfläche (461) und die Außenoberfläche (401) derart aufeinander abgestimmt sind, dass der Betätigungseinheit (200) Bewegungsspiel zumindest in radialer Richtung verbleibt.

45. Betätigungseinheit samt getriebeseitiger Halterung nach einem der Ansprüche 42 bis 44, **dadurch gekennzeichnet, dass** die Abstützung bzw. der Zentrierungseingriff vermittels wenigstens eines elastischen Zwischenelements (462) erfolgt.

46. Betätigungseinheit samt getriebeseitiger Halterung nach einem der Ansprüche 42 bis 45, **dadurch gekennzeichnet, dass** die Innenoberfläche (461) und die Außenoberfläche (401) einen Austrittsbereich (456) für wenigstens eine Getriebeeingangswelle zumindest bereichsweise, vorzugsweise insgesamt über einem Umfangswinkel von wenigstens etwa 90°, höchstvorzugsweise von wenigstens etwa 180°, noch stärker bevorzugt von wenigstens etwa 270°, radial weiter außen umgeben.

47. Betätigungseinheit samt getriebeseitiger Halterung nach einem der Ansprüche 42 bis 46, **dadurch gekennzeichnet, dass** die Innenoberfläche (461) zumindest bereichsweise als Einfädel-Oberfläche ausgeführt ist, mittels der eine Axialbewegung der hieran angreifenden Betätigungseinheit (200) in eine die Betätigungseinheit einer radialen Sollstellung annähernde Radialbewegung der Betätigungseinheit umsetzbar ist.

48. Betätigungseinheit samt getriebeseitiger Halterung nach einem der Ansprüche 42 bis 47, **dadurch gekennzeichnet, dass** die Aufnahme (450) wenigstens eine die Innenoberfläche (461) aufweisende Halterungswandung (460) aufweist, die einen/den Austrittsbereich (456) für wenigstens eine Getriebeeingangswelle zumindest bereichsweise radial weiter außen umgibt.

49. Betätigungseinheit samt getriebeseitiger Halterung nach einem der Ansprüche 42 bis 48, **dadurch gekennzeichnet, dass** der Einsteckabschnitt (450) der Betätigungseinheit (200) wenigstens einen gegenüber dem Stützglied radial vorstehenden, vorzugsweise als Flansch ausgebildeten Eingriffsbereich (403) aufweist, an dem die Außenoberfläche (401) ausgebildet ist.

50. Betätigungseinheit samt getriebeseitiger Halterung nach einem der Ansprüche 42 bis 49, **dadurch gekennzeichnet, dass** die getriebeseitige Halterung integraler Bestandteil des Getriebegehäuses ist oder als gesondertes Bauteil (450) oder gesonderte Bauteilgruppe am Getriebe (210a) drehfest und vorzugsweise axial fest angebracht oder anbringbar ist.

51. Betätigungseinheit samt getriebeseitiger Halterung nach Anspruch 50, **dadurch gekennzeichnet, dass** die vorzugsweise schalenähnlich ausgeführte Halterung (450) einteilig zusammenhängt.

52. Betätigungseinheit samt getriebeseitiger Halterung nach einem der Ansprüche 42 bis 51, **dadurch gekennzeichnet, dass** der Einsteckabschnitt als gegenüber dem Stützglied (220) gesondertes Bauteil (400) oder gesonderte Baugruppe ausgeführt, und am Stützglied (220) drehfest und vorzugsweise axial fest angebracht oder anbringbar ist.

53. Betätigungseinheit samt getriebeseitiger Halterung nach einem der Ansprüche 42 bis 52, **gekennzeichnet durch** einen derartigen Eingriff zwischen dem Betätigungsglied (222; 224) und dem Stützglied (220), dass eine unter Vermittlung des Aktuators dem Betätigungsglied erteilte Drehbewegung relativ zu dem gegen Verdrehung abgestützten Stützglied (220) in eine axiale Translationsbewegung des Betätigungsglieds relativ zu dem axial abgestützten Stützglied umgesetzt wird.

54. Betätigungseinheit samt getriebeseitiger Halterung nach einem der Ansprüche 42 bis 53, **dadurch gekennzeichnet, dass** sie für eine Mehrfach-Reibungskupplungseinrichtung, ggf. Doppel-Reibungskupplungseinrichtung, vorgesehen ist, um wahlweise eine erste oder/und eine zweite Reibungskupplungsanordnung der Reibungskupplungseinrichtung im Einrück- oder Ausrücksinne zu betätigen, umfassend wenigstens ein der ersten Reibungskupplungsanordnung zugeordnetes erstes Betätigungsglied (224) und wenigstens ein der zweiten Reibungskupplungsanordnung zugeordnetes zweites Betätigungsglied (222), die relativ zu dem oder wenigstens einem axial im Wesentlichen feststehenden Stützglied (220) zum Ausüben der Betätigungskräfte axial verstellbar sind und jeweils zu einem der jeweiligen Kupplungsanordnung zugeordneten Aktuator gehören oder unter Vermittlung eines der jeweiligen Kupplungsanordnung zugeordneten Aktuators axial relativ zum Stützglied (220) verstellbar sind.

55. Betätigungseinheit samt getriebeseitiger Halterung nach Anspruch 54, **gekennzeichnet durch** einen derartigen Eingriff zwischen dem ersten (224) und zweiten (222) Betätigungsglied einerseits und dem Stützglied (220) andererseits, dass eine unter Vermittlung des jeweiligen Aktuators dem jeweiligen Betätigungsglied erteilte Drehbewegung relativ zu dem gegen Verdrehung abgestützten Stützglied (220) in eine axiale Translationsbewegung des Betätigungsglieds relativ zu dem axial abgestützten Stützglied umgesetzt wird.

56. Betätigungseinheit samt getriebeseitiger Halterung nach Anspruch 53 oder 55, **gekennzeichnet durch** die kennzeichnenden Merkmale wenigstens eines der Ansprüche 1 bis 41.

57. Betätigungseinheit für eine Kombination nach wenigstens einem der Ansprüche 42 bis 56, mit den sich auf die Betätigungseinheit beziehenden Merkmalen wenigstens eines der Ansprüche 42 bis 56.

**58.** Getriebeseitige Halterung für eine Kombination nach wenigstens einem der Ansprüche 42 bis 56, mit den sich auf die getriebeseitige Halterung beziehenden Merkmalen wenigstens eines der Ansprüche 42 bis 56.

**59.** Kupplungseinrichtung, ggf. Doppel- oder Mehrfach-Kupplungseinrichtung (10), für die Anordnung in einem Kraftfahrzeug-Antriebsstrang zwischen einer Antriebseinheit und einem Getriebe, umfassend:

- eine Gehäuseanordnung (24), welche mit einem Antriebsorgan (84) zur gemeinsamen Drehung um eine Drehachse (A) gekoppelt oder koppelbar ist,
- wenigstens eine einer Getriebeeingangswelle (16; 18) zugeordnete Kupplungsanordnung (12, 32, 34; 14, 32, 36) mit wenigstens einer Anpressplatte (34; 36), durch welche wenigstens ein Reibbereich wenigstens einer Kupplungsscheibe (12; 14) gegen einen mit der Gehäuseanordnung drehbaren Widerlagerbereich (32) pressbar ist,
- eine eine Betätigungseinrichtung (200) bzw. Betätigungseinheit, ggf. mit zugehöriger getriebeseitiger Halterung, nach einem der vorhergehenden Ansprüche umfassende Betätigungsanordnung (40, 60, 200) zum Einund Ausrücken der Kupplungsanordnung (12, 32, 34; 12, 32, 36) unter Vermittlung eines der Kupplungsanordnung zugeordneten Betätigungsglieds (222; 224) der Betätigungseinrichtung bzw. Betätigungseinheit, das relativ zu wenigstens einem axial im Wesentlichen feststehenden Stützglied (200) der Betätigungseinrichtung bzw. Betätigungseinheit axial verstellbar ist und zu einem der Kupplungsanordnung zugeordneten Aktuator gehört oder unter Vermittlung eines der Kupplungsanordnung zugeordneten Aktuators axial relativ zum Stützglied (220) verstellbar ist.

**60.** Kupplungseinrichtung nach Anspruch 59, **dadurch gekennzeichnet, dass** von dem Betätigungsglied (222; 224) entsprechend seiner Axialstellung ausgeübte axiale Stell- oder/und Positionierungskräfte zur Anpressplatte (34; 36) oder/und zu einer der Anpressplatte zugeordneten Federanordnung (40; 60) übertragbar sind, dass bei der axialen Verstellung des Betätigungsglieds (222; 224) relativ zum Stützglied (220) oder/und beim Aufbau der axialen Stell- oder/und Positionierungskräfte induzierte axiale Gegenkräfte unter Vermittlung des Stützglieds (220) abstützbar sind, dass durch die übertragenen axialen Stell- oder/und Positionierungskräfte induzierte axiale Gegenkräfte unter Vermittlung der Gehäuseanordnung (24) abstützbar sind, und dass das Stützglied (220) und die Gehäuseanordnung (24) in axialer Abstützbeziehung stehen, derart, dass von der Gehäuseanordnung (24) aufgenommene axiale Gegenkräfte aufgrund der Übertragung von axialen Stell- oder/und Positionierungskräften und vom Stützglied (220) aufgenommene axiale Gegenkräfte aufgrund der axialen Verstellung des Betätigungsglieds (222; 224) relativ zum Stützglied (220) bzw. des Aufbaus der axialen Stell- oder/und Positionierungskräfte sich zumindest teilweise, vorzugsweise im Wesentlichen vollständig gegenseitig aufheben.

**61.** Kupplungseinrichtung nach Anspruch 60, **dadurch gekennzeichnet, dass** die axiale Abstützbeziehung zwischen dem Stützglied (220) und der Gehäuseanordnung (24) einen innerhalb der Kupplungseinrichtung verlaufenden, in sich geschlossenen Axialkraftfluss vorsieht.

**62.** Kupplungseinrichtung nach Anspruch 60 oder 61, **dadurch gekennzeichnet, dass** zwischen einem vorzugsweise deckelartigen Gehäuseabschnitt (28) der Gehäuseanordnung (24) und dem ggf. hülsenartigen Stützglied (220) eine Drehlageranordnung (230) wirksam ist, die axiale Abstützkräfte zwischen dem Gehäuseabschnitt (28) und dem Stützglied (220) überträgt.

**63.** Kupplungseinrichtung nach einem der Ansprüche 59 bis 62, **dadurch gekennzeichnet, dass** die Betätigungsanordnung eine der Anpressplatte zugeordnete Betätigungshebelanordnung oder Betätigungsfederanordnung (40; 60) aufweist, die ggf. am Gehäuseabschnitt (28) gehalten ist.

**64.** Kupplungseinrichtung nach Anspruch 63, **dadurch gekennzeichnet, dass** der Betätigungshebelanordnung oder Betätigungsfederanordnung (40; 60) ein mit der Gehäuseanordnung drehbarer Abstützbereich zugeordnet ist, an dem die Betätigungshebelanordnung bzw. die Betätigungshebelanordnung direkt oder indirekt axial abgestützt oder abstützbar ist.

**65.** Kupplungseinrichtung nach einem der Ansprüche 54 bis 64, **dadurch gekennzeichnet, dass** die Kupplungsanordnung (10) vom NORMALERWEISE-GESCHLOSSEN-Typ ist.

**66.** Kupplungseinrichtung nach einem der Ansprüche 59 bis 64, **dadurch gekennzeichnet, dass** die Kupplungsanordnung (10) von NORMALERWEISE-OFFEN-Typ ist.

**67.** Kupplungseinrichtung nach einem der Ansprüche 54 bis 66, **dadurch gekennzeichnet, dass** die Gehäuseanordnung (24), die wenigstens eine Kupplungsanordnung (12, 32, 34; 14, 32, 36) und die Betätigungsanordnung (40, 60, 200) eine Einbau-Baueinheit bilden.

**68.** Kupplungseinrichtung, ggf. Doppel- oder Mehrfach-Kupplungseinrichtung, für die Anordnung in einem Kraftfahrzeug-Antriebsstrang zwischen einer Antriebseinheit und einem Getriebe, umfassend wenigstens eine einer Getriebeeingangswelle zugeordnete, für einen Betrieb unter der Einwirkung einer Betriebsflüssigkeit, insbesondere eines Kühlöls vorgesehene Lamellen-Kupplungsanordnung und eine mit der Kupplungsanordnung in Wirkverbindung stehende oder bringbare, gewünschtenfalls in die Kupplungseinrichtung integrierte Betätigungseinrichtung (200) bzw. Betätigungseinheit, ggf. mit zugehöriger getriebeseitiger Halterung, nach einem der Ansprüche 1 bis 58 zum Ein- und Ausrücken der Kupplungsanordnung unter Vermittlung eines der Kupplungsanordnung zugeordneten Betätigungsglieds (222; 224) der Betätigungseinrichtung bzw. Betätigungseinheit, das relativ zu wenigstens einem axial im Wesentlichen feststehenden Stützglied (200) der Betätigungseinrichtung bzw. Betätigungseinheit axial verstellbar ist und zu einem der Kupplungsanordnung zugeordneten Aktuator gehört oder unter Vermittlung eines der Kupplungsanordnung zugeordneten Aktuators axial relativ zum Stützglied (220) verstellbar ist.

**69.** Kupplungseinrichtung nach Anspruch 68, **dadurch gekennzeichnet, dass** zumindest Eingriffsbereichen des Stützglieds und des (jeweiligen) Betätigungsglieds, die auf Grundlage eines gegenseitigen Eingriffs die Umsetzung der Drehbewegung in die Translationsbewegung vermitteln, Betriebsflüssigkeit zuführbar ist oder im Betrieb zwangsweise zugeführt wird, mit der Wirkung einer Nassschmierung der Eingriffsbereiche.

**70.** Kupplungseinrichtung nach einem der Ansprüche 59 bis 69, **dadurch gekennzeichnet, dass** die Kupplungseinrichtung eine Mehrfach-Kupplungseinrichtung, ggf. Doppel-Kupplungseinrichtung (10), ist und eine einer ersten Getriebeeingangswelle (16) zugeordnete erste Kupplungsanordnung (12, 32, 34) und eine einer zweiten Getriebeeingangswelle (18) zugeordnete zweite Kupplungsanordnung (14, 32, 36) aufweist.

**71.** Kraftfahrzeug-Antriebsstrang mit einer Antriebseinheit, einem Getriebe und einer zwischen der Antriebseinheit und dem Getriebe angeordneten Kupplungseinrichtung nach einem der Ansprüche 59 bis 70 oder/und mit einer Betätigungseinrichtung bzw. Betätigungseinheit, ggf. mit zugehöriger getriebeseitiger Halterung, nach wenigstens einem der Ansprüche 1 bis 58.

# Fig.1

Fig. 2

Fig.3

Fig. 4

220

302

300

302

Fig.5

308

306

304

220

304

306

308

Fig.6

Fig.7

Fig.8

Fig.9

a)

b)

Fig.10

Fig. 11

Fig.12

Fig.13

Fig.14

Fig. 15

EP 1 302 688 A2

Fig. 16b

Fig. 16a

Fig. 17

a)

b)

c)

453

454

450

460

455

453

453

453

462

461

460

462

460

450

460

460a

460b

460

Fig. 18

EP 1 302 688 A2

a)

B

460

454

455

453

453

450

B

b)

460b

461

450

453

460a

470

Fig. 19

EP 1 302 688 A2

a)

450

452

462

210a

b)

452

450

456

210a

452

452

Fig. 20.

EP 1 302 688 A2